# EUROPEAN PATENT APPLICATION

(11) **EP 4 485 206 A1**
(43) Date of publication of application: **01.01.2025**
(21) Application number: 24185539.4
(22) Date of filing: 28.06.2024
(51) Int. Cl.: G06F 9/54, G06F 11/32, G06F 11/34, G06T 7/00

(54) **REAL-TIME VISUALIZATION OF STATE MANAGED ASYNCHRONOUS RUNTIME**

(30) Priority: 30.06.2023 US 202318217417; 20.10.2023 US 202318382426
(71) Applicant: OMRON Corporation, Kyoto 600-8530 (JP)
(72) Inventor: DZIEZANOWSKI, Joseph, New Hampshire, 03268 (US); DZIEZANOWSKI, Lucas, New Hampshire, 03031 (US); KING, Steven J., New Hampshire, 03857 (US)
(74) Representative: HGF

(57) **Abstract**

This application is directed to information visualization for image processing. An electronic system implements a plurality of image processing cycles associated with a temporal sequence of triggers, and each image processing cycle is created in response to one or more respective trigger events. The electronic system obtains a plurality of input/output (I/O) signals of the plurality of image processing cycles and generates a plurality of cycle status signals. Each cycle status signal is associated with a sequence of time stamps and indicates progress of a respective image processing cycle based on the I/O signals. The sequence of time stamps has a temporal resolution that is higher than a predefined resolution. Dynamically and in real time, while implementing the image processing cycles, the electronic system visualizes the plurality of cycle status signals concurrently with respect to at least a first temporal axis on a user interface.

## Description

### RELATED APPLICATION

This application is a continuation-in-part of, and claims priority to, U.S. Patent Application No. 18/217,417, filed June 20, 2023, entitled "State Managed Asynchronous Runtime," which is incorporated by reference by its entirety.

### TECHNICAL FIELD

The disclosed embodiments relate generally to electronic circuits and more specifically to systems, devices, and methods for configuring hardware resources to process a plurality of image processing cycles in a plurality of parallel pipelines.

### BACKGROUND

Computer processors implement parallelism, pipelining, overlap of software tasks, and dedicated hardware acceleration to enhance their processing capabilities. These processing enhancement techniques are often limited to highly repeatable cycles that functionally implement identical or similar jobs involving little or no change from cycle to cycle. The computer processors are configured using a register model, and consistently apply a single configuration to drive runtime execution. For example, a processor pipeline oftentimes has a fixed number of stages. Multiple stages are staggered, and a stage of a current cycle oftentimes runs concurrently with a distinct stage of a previous cycle. It would be beneficial to develop a parallel processing mechanism that is highly flexible and efficient while utilizing existing computer resources sufficiently.

### SUMMARY

Various embodiments of this application are directed to a core high-performance runtime engine configured to process image data in parallel pipelines for heavy-duty industrial machine vision applications. The machine vision applications are applied in an electronic device (e.g., an imaging device including one or more cameras) to implement functions including, but not limited to, image processing, code reading, product information extraction, and print quality verification. Specifically, a state-managed asynchronous pipelined architecture is applied in the electronic device for image processing in these machine vision applications. Multiple image processing cycles are executed in parallel in a plurality of pipelines, exploiting hardware capabilities without bottlenecks. Each image processing cycle includes a plurality of time-critical stages and operations that are optionally triggered and staggered in a plurality of threads. In some embodiments, a trigger event is received while a previous image processing cycle is still in progress, and corresponds to a completely different image processing cycle assigned to a different pipeline that is implemented independently of the previous image processing cycle. In some prior art implementations, a stage of an image processing job uses available hardware capabilities, and may force any other image processing jobs or other stages of the same image processing job to wait in a queue. Conversely, in this application, the state-managed asynchronous pipelined architecture takes advantage of available hardware capabilities and results in an increase in performance by executing multiple image processing cycles in parallel pipelines independently of one another, and this performance increase scales linearly with the number of processor cores of an imaging device.

In one aspect, an image processing method is implemented at an electronic device (e.g., an imaging device) having memory and one or more processors. The method includes identifying a plurality of image processing cycles associated with a temporal sequence of triggers. Each image processing cycle is created in response to one or more respective trigger events. The method further includes assigning the plurality of image processing cycles to a plurality of parallel pipelines (e.g., each image processing cycle is assigned to a respective parallel pipeline) and, for each parallel pipeline, pulling a respective cycle data container from a cycle data pool. The method further includes processing a first image processing cycle in a first parallel pipeline to generate first report data, independently of processing remaining image processing cycles in respective remaining parallel pipelines. The method further includes providing the first report data to a client device, e.g., for further processing (such as storage, classification, analysis, and/or visualization).

In some embodiments, the cycle data pool includes a predefined number of cycle data containers prior to identifying the plurality of image processing cycles. Once assigned to a respective image processing cycle, each parallel pipeline directly uses one of the predefined number of cycle data containers without waiting for creation of a new cycle data container. In some situations, the predefined number of cycle data containers is fully used with different pipelines, and no cycle data container can be pulled for a new pipeline. In some embodiments, processing the first image processing cycle further includes populating a first cycle data container with image data associated with the one or more respective trigger events, generating first cycle data including the first report data, and storing the first cycle data in the first cycle data container.

In some embodiments, the imaging device is communicatively coupled to the client device (e.g., a laptop computer, a desktop computer, or a mobile phone) via a wired or wireless communication link. A user interface of the machine vision application is enabled on the client device to present report data collected from the imaging device in a user friendly manner. In some embodiments, the client device is located remotely from the imaging device, and coupled to the imaging device via a server. A web-based user interface is enabled on the client device to remotely review the report data that is reported by the imaging device by way of the server.

Some implementations of this application are directed to performance optimization and analysis of complex multi-process applications, especially those found in sectors like factory automation and quality control. Some implementations focus on systems that require high-precision event logging and interactive tuning, such as machine vision systems, barcode reading, and label verification systems. An advanced system is provided for real-time instrumentation, data consolidation, and interactive analysis of various event types, including temporal, digital, analog, and image data. Some implementations encompass use of intuitive visual interfaces and potentially machine learning methodologies for real-time system parameter adjustment to enhance system performance and reliability.

More specifically, in another aspect, a method is implemented at an electronic system having memory and one or more processors for tracking image processing cycles in real time. The method includes implementing a plurality of image processing cycles associated with a temporal sequence of triggers, and each image processing cycle is created in response to one or more respective trigger events. The method further includes obtaining a plurality of input/output (I/O) signals of the plurality of image processing cycles and generating a plurality of cycle status signals based on the I/O signals. Each cycle status signal is associated with a sequence of time stamps and indicates progress of a respective image processing cycle. The sequence of time stamps has a temporal resolution that is higher than a predefined resolution. The method further includes, dynamically and in real time, while implementing the image processing cycles, visualizing the plurality of cycle status signals concurrently with respect to at least a first temporal axis on a user interface.

In accordance with some embodiments, an electronic system includes one or more processors, memory, and one or more programs stored in the memory. The programs are configured for execution by the one or more processors. The one or more programs include instructions for performing any of the methods described herein.

In accordance with some embodiments, a non-transitory computer-readable storage medium stores one or more programs configured for execution by an electronic system having one or more processors and memory. The one or more programs include instructions for performing any of the methods described herein.

Thus methods, systems, and devices are disclosed that enable optimal design, execution, and performance of barcode scanners.

Note that the various embodiments described above can be combined with any other embodiments described herein. The features and advantages described in the specification are not all inclusive and, in particular, many additional features and advantages will be apparent to one of ordinary skill in the art in view of the drawings, specification, and claims. Moreover, it should be noted that the language used in the specification has been principally selected for readability and instructional purposes and may not have been selected to delineate or circumscribe the entire inventive subject matter.

### BRIEF DESCRIPTION OF THE DRAWINGS

Figure 1 is a perspective view of an electronic device (e.g., a scanning device), in accordance with some embodiments.
Figure 2 is a block diagram of an example electronic device, in accordance with some embodiments.
Figure 3 is an example image processing environment including an electronic device that processes images data using parallel pipelines, in accordance with some embodiments.
Figure 4 illustrates a process of processing image data in a plurality of parallel pipelines, in accordance with some embodiments.
Figure 5 illustrates another example process of processing image data in a plurality of parallel pipelines, in accordance with some embodiments.
Figure 6 illustrates another example process of processing image data in a plurality of parallel pipelines, in accordance with some embodiments.
Figure 7 is a temporal diagram of a plurality of image processing cycles implemented in a plurality of parallel pipelines, in accordance with some embodiments.
Figure 8 is a flow diagram of a method for processing image data, in accordance with some embodiments.
Figure 9 is a diagram of a data structure for signals and data applied in an image processing environment, in accordance with some embodiments.
Figure 10 is a temporal diagram of an image processing cycle implemented in one of a plurality of parallel pipelines, in accordance with some embodiments.
Figures 11A-11D are four example temporal diagrams of a plurality of image processing cycles, in accordance with some embodiments.
Figure 12 is an example collapsed graphical user interface (GUI) that visualizes signals of a plurality of image processing cycles 404 in an extended duration of time, in accordance with some embodiments.
Figure 13 is another example user interface 1300 that visualizes signals of a plurality of image processing cycles, in accordance with some embodiments.
Figure 14A is a portion of an example user interface that visualizes cycle status signals and I/O signals of three image processing cycles, in accordance with some embodiments, and Figure 14B is a portion of another example user interface that displays a histogram of capture times of a plurality of image processing cycles, in accordance with some embodiments.
Figure 15 is a flow diagram of a method for tracking image processing cycles in real time, in accordance with some embodiments.

Reference will now be made to embodiments, examples of which are illustrated in the accompanying drawings. In the following description, numerous specific details are set forth in order to provide a thorough understanding of the present invention. However, it will be apparent to one of ordinary skill in the art that the present invention may be practiced without requiring these specific details.

### DESCRIPTION OF EMBODIMENTS

Various embodiments of this application are directed to a core high-performance runtime engine configured to process image data in parallel pipelines for heavy-duty industrial machine vision applications. A state-managed asynchronous pipelined architecture is applied in an electronic device (e.g., an imaging device) for image processing in these machine vision applications. Specifically, the electronic device identifies a plurality of image processing cycles associated with a temporal sequence of triggers, and each image processing cycle is created in response to one or more respective trigger events (e.g., acquisition of an image). The electronic device assigns the plurality of image processing cycles to a plurality of parallel pipelines. For each parallel pipeline, a pre-existing cycle data container is pulled from a cycle data pool. A first image processing cycle is processed in a first parallel pipeline to generate first report data, independently of remaining image processing cycles in respective remaining parallel pipelines. The first report data is provided to a client device. In some embodiments, each image processing cycle includes a plurality of time-critical operations and stages that are optionally triggered and staggered in a plurality of threads of a corresponding pipeline. Such a state-managed asynchronous pipelined architecture takes advantage of available hardware capabilities and results in a substantial increase in performance by executing multiple image processing cycles in parallel pipelines independently, and this performance increase scales linearly with a number of processor cores (e.g., CPUs, FPGAs, NPUs, and/or GPUs) of the electronic device.

The primary objective of the state-managed asynchronous pipelined architecture is to achieve maximum performance for an image processing system for full utilization of hardware resources including, but not limited to, processors, acquisition sources, input/output, communication channels, processing threads, and processes. Additionally, this architecture greatly simplifies user intervention to control, configure and monitor a runtime, thereby enhancing user experience. In some embodiments, the processing pipelines and associated hardware and software settings are altered at any time without creating a significant overhead. In some embodiments, self-analysis and tuning of the architecture is automatically enabled by deep instrumentation to improve image processing performance with no or little user interaction.

Some implementations of this application are directed to performance optimization and analysis of complex multi-process applications, especially those found in sectors like factory automation and quality control. Some implementations focus on systems that require high-precision event logging and interactive tuning, such as machine vision systems, barcode reading, and label verification systems. An advanced system is provided for real-time instrumentation, data consolidation, and interactive analysis of various event types, including temporal, digital, analog, and image data. Some implementations encompass use of intuitive visual interfaces and potentially machine learning methodologies for real-time system parameter adjustment to enhance system performance and reliability.

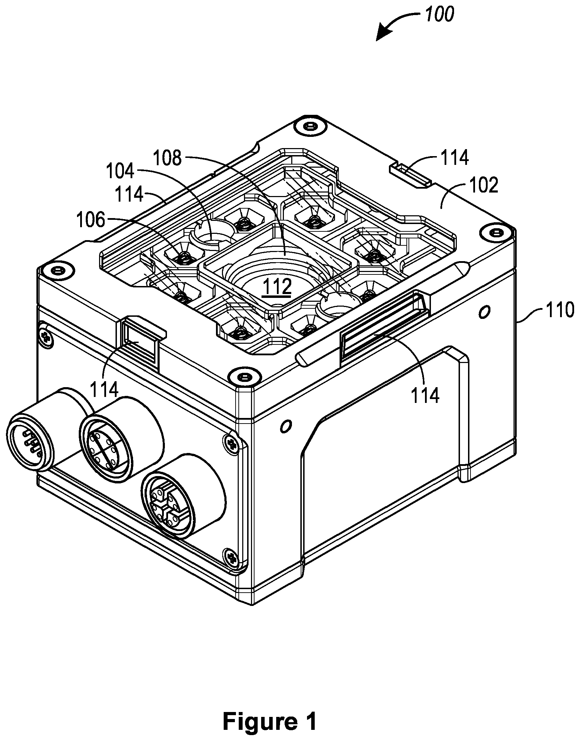

Figure 1 is a perspective view of an electronic device 100 (e.g., a scanning device), in accordance with some embodiments. In some embodiments, the electronic device 100 is also referred to as a code reader, a barcode scanner, a label scanner, an optical scanner, or an image capturing system. In some embodiments, the electronic device 100 is part of an optical data reading system (e.g., a label scanning station). The electronic device 100 includes a housing 110 (e.g., a body or an exterior case) for protecting components that are located inside the electronic device 100. In some embodiments, the housing 110 includes integrated fittings or brackets to keep the internal components in place. In some embodiments, the electronic device 100 includes a top cover 102 positioned on the top side of the electronic device 100. In some embodiments, the top cover 102 is transparent or partially transparent.

In some embodiments, the electronic device 100 includes one or more distance sensors 104 (e.g., internal distance sensors), which are positioned within the electronic device 100. For example, referring to Figure 1, a distance sensor 104 is positioned inside the electronic device 100 (e.g., adjacent to the top cover 102), and faces the front end of the electronic device 100. In some embodiments, the distance sensor 104 is included in a targeting module. The distance sensor 104 projects a beam of light at a target to aid in visual alignment of the target when the target is disposed on the electronic device 100. This helps align the camera to a center point of an imaging plane or a field of view. In some embodiments, each distance sensor 104 is a time-of-flight (TOF) sensor, an ultrasonic sensor, a radar sensor, a light detection and ranging (LiDAR) sensor, or an infrared (IR) distance sensor. In some embodiments, the electronic device 100 includes two or more distance sensors 104, each having the same type (e.g., each of the two or more distance sensors is a TOF sensor). In some embodiments, the electronic device 100 includes two or more distance sensors, at least two of which are of distinct types (e.g., the electronic device 100 includes a TOF distance sensor and a radar sensor). In some embodiments, the electronic device 100 includes one or more proximity sensors for sensing (e.g., detecting) if an object is within the sensing area where the proximity sensor is designed to operate. In some embodiments, the electronic device 100 uses distance measuring techniques, such as an image focus finder, an analog-to-digital conversion (ADC) circuit, and/or a digital-to-analog conversion (DAC) circuit, to determine the distance between a target object and the electronic device 100.

More specifically, in some embodiments, the distance sensor 104 is a TOF sensor. A TOF sensor measures the elapsed time from the emission of a signal (e.g., a wave pulse, an LED pulse, a laser pulse, or IR waves) from the sensor to the moment it returns to the sensor after reflecting off of an object. Distance is then calculated by using the speed of light in air and the time between sending/receiving the signal. In some embodiments, the distance sensor 104 is an ultrasonic sensor. An ultrasonic sensor, or a Sonar sensor, detects the distance to an object by emitting high-frequency sound waves. The ultrasonic sensor emits high-frequency sound waves towards a target object, and a timer is started. The target object reflects the sound waves back towards the sensor. A receiver picks up the reflected wave and stops the timer. The time taken for the wave's return is calculated against the speed of sound to determine the distance travelled. In some embodiments, the distance sensor 104 is a radar sensor. The radar sensor (e.g., a radar distance sensor) transmits high frequency radio waves (e.g., microwaves) and calculates the distance to an object by measuring the reflection of the radio waves from the object. In some embodiments, the radar sensor is configured to determine the distance, the angle, and the radial velocity of an object relative to the location of the electronic device 100. In some embodiments, the distance sensor 104 is a LiDAR sensor, which measures the range of a target object through light waves from a laser (e.g., instead of radio or sound waves). In some embodiments, the distance sensor 104 is an infrared (IR) distance sensor. An IR distance sensor works through the principle of triangulation, measuring distance based on the angle of the reflected beam.

In some embodiments, the electronic device 100 further includes a plurality of light sources 106 (e.g., 8 light emitting diodes (LEDs) in Figure 1) mounted on a printed circuit board (PCB) 108. A light source 106 is also called a lighting source, an illumination source, or an illuminator. In some embodiments, the light sources 106 are part of an illumination system of the electronic device 100, which also includes illuminators (e.g., bright field and dark field illuminators), a reflector, and a lighting module. More details on the illumination system are described in U.S. Patent Application No. 14/298,659, filed June 6, 2014, entitled "Combination Dark Field and Bright Field Illuminator," now U.S. Patent No. 8,989,569, issued on March 24, 2015, which is incorporated by reference herein in its entirety.

In some embodiments, the light sources 106 have one or more lighting types. Examples of the lighting types include, but are not limited to, LED light sources, laser light sources, and liquid crystal display (LCD) lights. Each of the lighting types has respective lighting characteristics, such as color (e.g., blue, red, or green) and/or intensity. The light sources 106 are mounted on (e.g., soldered on) the PCB 108, which is positioned within the electronic device 100 (e.g., behind the top cover 102). The PCB 108 includes a front surface facing the top cover 102 of the electronic device 100. In some embodiments, the light sources mounted on the front surface of the PCB 108 includes both long range light sources and low angle light sources.

In some embodiments, the electronic device 100 includes a camera 112. A lens of the camera 112 is exposed via an opening of the PCB 108 and physically surrounded by the light sources 106. The light sources 106 are grouped into a plurality of illumination units (e.g., a first illumination unit and a second illumination unit). Each illumination unit is configured to be independently controlled to illuminate a distinct region of the field of view of the camera 112. In an example, every two light sources 106 near a corner of the top cover 102 are grouped to form an illumination unit. Four illumination units are independently controlled to illuminate respective regions of a field of view of the camera 112 in a sequential or concurrent manner.

In some embodiments, the electronic device 100 further includes one or more indicators 114. Each indicator 114 is located at an edge of the top cover 102 of the electronic device 100, and configured to be illuminated according to a light pattern in which a single color or different colors are displayed for a sequence of temporal durations defined based on the frequency. In some situations, the light pattern represents a message including data or status of the electronic device 100. For example, the indicators 114 are illuminated with a red color continuously in response to detection of the presence of a product on or near the top cover, and turn to a green color and stay in green for a shortened duration of time in response to a successful scan of a barcode displayed on the product. In some embodiments, each indicator 114 includes one or more LEDs from which light is emitted, and the light is displayed on the indicator 114 in a substantially uniform and homogeneous manner.

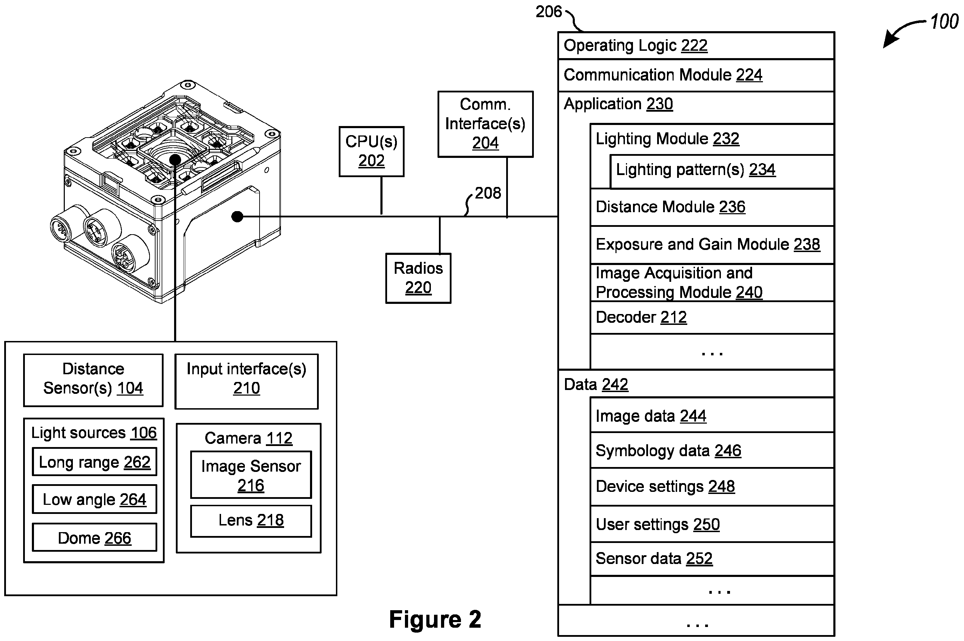

Figure 2 is a block diagram of an example electronic device 100, in accordance with some embodiments. The electronic device 100 includes one or more distance sensors 104, as described previously with respect to Figure 1. In some embodiments, the one or more distance sensors 104 include one or more of: a time-of-flight sensor, an ultrasonic sensor, a radar sensor, or a LiDAR sensor. In some embodiments, the electronic device 100 includes one or more proximity sensors for sensing (e.g., detecting) if an object is within the sensing area where the proximity sensor is designed to operate. In some embodiments, the electronic device 100 uses distance measuring techniques, such as an image focus finder, analog-to-digital conversion (ADC), and/or digital-to-analog conversion (DAC), to determine the distance between a target object and the electronic device 100.

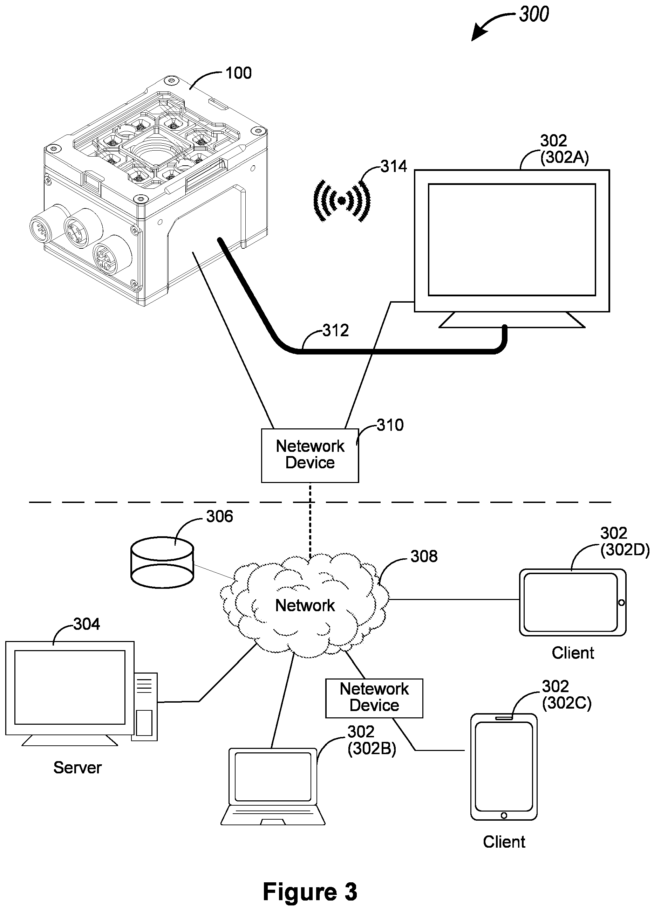

The electronic device 100 includes light sources 106. In some embodiments, the light sources 106 include a long range light source 262, a low angle light source 264, and/or a dome light source 266, as described in Figure 3 and in U.S. Patent Application No. 14/298,659, filed June 6, 2014, entitled "Combination Dark Field and Bright Field Illuminator," now U.S. Patent No. 8,989,569, which issued on March 24, 2015 and is incorporated by reference herein in its entirety. In some embodiments, the light sources 106 provide illumination in visible light. In some embodiments, the light sources 106 provide illumination in invisible light (e.g., in infrared light or violet light).

In some embodiments, the electronic device 100 includes a decoder 212 for decoding data contained in a barcode and sending the data to a computer device. In some embodiments, the decoder 212 is part of a software application 230. Details of the decoder 212 are described in U.S. Patent Application No. 14/298,659, filed June 6, 2014, entitled "Combination Dark Field and Bright Field Illuminator," now U.S. Patent No. 8,989,569, which issued on March 24, 2015 and is incorporated by reference herein in its entirety.

In some embodiments, the electronic device 100 includes one or more input interfaces 210 for facilitating user input. In some embodiments, the electronic device 100 is a battery-operated device and includes a rechargeable battery. In this instance, the input interface 210 can include a charging port for charging the battery.

In some embodiments, the electronic device 100 includes a camera 112, which includes an image sensor 216 and a lens 218. The lens 218 directs the path of light rays and concentrates them onto the image sensor 216, to re-create the image as accurately as possible on the image sensor. The image sensor 216 converts light (e.g., photons) into electrical signals that can be interpreted by the electronic device 100. In some embodiments, the lens 218 is an optical lens and is made from glass or other transparent material. In some embodiments, the lens 218 is a liquid lens that is composed of an optical liquid material, and whose shape, focal length, and/or working distance varies when a current or voltage is applied to the liquid lens. In some embodiments, the electronic device 100 (e.g., via the processor(s) 202) uses distance information obtained by the distance sensor 104, to determine the optimal current or voltage to apply to the liquid lens 218 so as to have the optimal focal length for decoding the barcode data contained in an image. In some embodiments, the camera 112 is configured to capture images in color. In some embodiments, the camera 112 is configured to capture images in black and white.

The electronic device 100 also includes one or more processors (e.g., CPU(s)) 202, one or more communication interface(s) 204 (e.g., network interface(s)), memory 206, and one or more communication buses 208 for interconnecting these components (sometimes called a chipset).

In some embodiments, the electronic device 100 includes radios 220. The radios 220 enable one or more communication networks, and allow the electronic device 100 to communicate with other devices, such as a computer device or a server. In some embodiments, the radios 220 are capable of data communication using any of a variety of custom or standard wireless protocols (e.g., IEEE 802.15.4, Wi-Fi, ZigBee, 6LoWPAN, Thread, Z-Wave, Bluetooth Smart, ISA100.5A, WirelessHART, MiWi, Ultrawide Band (UWB), and/or software defined radio (SDR)), custom or standard wired protocols (e.g., Ethernet or HomePlug), and/or any other suitable communication protocol, including communication protocols not yet developed as of the filing date of this patent application.

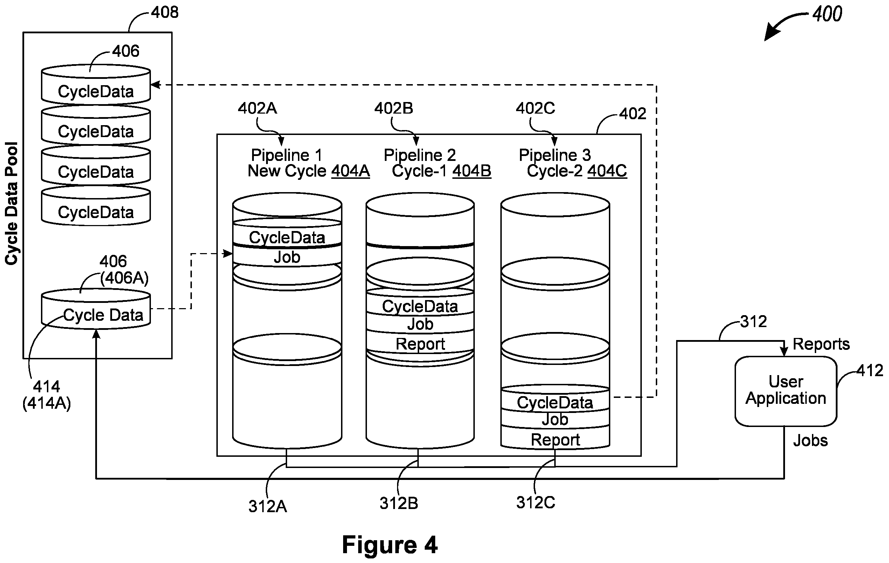

The memory 206 includes high-speed random access memory, such as DRAM, SRAM, DDR RAM, or other random access solid state memory devices. In some embodiments, the memory includes non-volatile memory, such as one or more magnetic disk storage devices, one or more optical disk storage devices, one or more flash memory devices, or one or more other non-volatile solid state storage devices. In some embodiments, the memory 206 includes one or more storage devices remotely located from one or more processor(s) 202. The memory 206, or alternatively the non-volatile memory within the memory 206, includes a non-transitory computer-readable storage medium. In some embodiments, the memory 206, or the non-transitory computer-readable storage medium of the memory 206, stores the following programs, modules, and data structures, or a subset or superset thereof:
- operating logic 222, including procedures for handling various basic system services and for performing hardware dependent tasks;
- a communication module 224 (e.g., a radio communication module), which connects to and communicates with other network devices (e.g., a local network, such as a router that provides Internet connectivity, networked storage devices, network routing devices, server systems, computing devices, and/or other connected devices) coupled to one or more communication networks via the communication interface(s) 204 (e.g., wired or wireless);
- an application 230, which acquires images that contain labels (e.g., barcodes) and decodes the labels, and controls one or more components of the electronic device 100 and/or other connected devices in accordance with the determined state. In some embodiments, the application 230 includes:
   ∘ a lighting module 232, which selects and deploys (e.g., based on distance measurements, such as direct measurements from the distance sensor(s) 104 or indirect measurements) one or more light sources 106 and/or sequences of lighting patterns 234 for a current read cycle;
   ∘ a distance module 236, which determines (e.g., selects) which sequence of focus distances to be employed during the current read cycle, based on distance measurements from the distance sensor(s) 104;
   ∘ an exposure and gain module 238, which samples images 244 captured by the camera 112;
   ∘ an image acquisition and processing module 240, which acquires and processes images, e.g., in accordance with a process illustrated in one of Figures 4-6 and 8; and
   ∘ a decoder 212 for decoding data contained in a barcode and sending the data to a computer device;
- data 242 for the electronic device 100, including but not limited to:
   ∘ image data 244 (e.g., camera data);
   ∘ symbology data 246 (e.g., types of codes, such as bar codes);
   ∘ device settings 248 for the electronic device 100, such as default options, image acquisition settings (e.g., exposure and gain settings), and preferred user settings; and
   ∘ user settings 250, such as a preferred shade for the lenses (e.g., for photochromic lenses); and
   ∘ sensor data 252 that is acquired (e.g., measured) from the distance sensor(s) 104 and/or other sensors that are included in the electronic device 100.

In some embodiments, the distance sensor 104 is monitored by the lighting module 232. When the user commences a current read cycle, the distance sensor 104 identifies a distance field (e.g., near field, medium field, or far field) corresponding to the location of the target object. The lighting module 232 selects a lighting sequence, corresponding to the distance field, for execution. If a good read was achieved in a previous read cycle (e.g., a good read from the third lighting pattern of the near field lighting sequence), and the current read cycle has the same distance field as the previous read cycle, the application 230 will commence the current read cycle by using values of the earlier good read (e.g., the third lighting pattern of the near field lighting pattern, the previous focus position, the exposure, and/or the gain), before starting the lighting sequence from the beginning. Users are typically reading many similar parts, and the apparatus can achieve a good read sooner if it starts with known good settings from the last decode operation. If no previous settings lead to a good read, then the lighting sequence for the current distance field starts at the beginning and iterates through each sequence capture-after-capture.

In some embodiments, the exposure and gain module 238 rejects images that do not fall within predefined attribute ranges for "brightness" and/or "sharpness" (e.g., the rejected images are not processed by the image acquisition and processing module 240). In some embodiments, the exposure and gain module 238 updates image acquisition settings (such as exposure and gain) for the next coming image capture in order to provide the optimal "brightness" for image processing.

In some embodiments, after an image is captured (e.g., using the camera 112), the electronic device 100 (e.g., via the application 230) evaluates the quality of an acquired image. For example, the electronic device 100 reads (e.g., determines) a sharpness value, an average light mean value, and/or an average dark mean value of the image, to determine whether to qualify or reject the image. If the results do not meet or exceed predefined target values, the image is rejected and another image is recaptured. If the results meet or exceed the predefined target values, the image is processed (e.g., by the image acquisition and processing module 240).

As an example, in some embodiments, a good quality image is an image sample that has a light mean score between 100 - 170 (out of the range of 0 to 255), a dark mean score between 20 - 80 (out of the range of 0 to 255), and a sharpness score above 6000 (out of the range from 0 to about 12,000).

In some embodiments, data collected during the image sampling (e.g., evaluation) is captured and added (e.g., as data 242).

In some embodiments, after qualifying the image, the electronic device 100 (e.g., via the application 230) determines whether to adjust the exposure or gain setting (e.g., using a light mean correction path or a dark mean correction path) for the next image. Should it decide to do so, the electronic device 100 gathers the target light mean and dark mean values for comparison, deploys a Proportional and Integral (PI) Controller transfer function, and computes necessary changes to exposure in order to obtain an ideal exposure in the next image.

In some embodiments, upon successful decode of an image, the exposure, gain, and focus values are fed back to the application 230. On the following read cycle, the application 230 checks if these decode settings are pending. If they are, the electronic device 100 attempts to load camera settings and any previous settings, as opposed to calculating the next configuration of settings. Should the previous decode settings be used, the application 230 samples the image for data but does not adjust the feedback controller's values.

Each of the above identified executable modules, applications, or sets of procedures may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise re-arranged in various embodiments. In some embodiments, the memory 206 stores a subset of the modules and data structures identified above. Furthermore, the memory 206 may store additional modules or data structures not described above. In some embodiments, a subset of the programs, modules, and/or data stored in the memory 206 are stored on and/or executed by a server system, and/or by an external device (e.g., a computing device).

Figure 3 is an example image processing environment 300 including an electronic device 100 that processes images data using parallel pipelines, in accordance with some embodiments. In some embodiments, the electronic device 100 is an imaging device. In some embodiments, the electronic device 100 is a code reader, a barcode scanner, a label scanner, or an optical scanner. In some embodiments, the electronic device 100 is part of an optical data reading system (e.g., a label scanning station). In some embodiments, the electronic device 100 is configured to obtain image data including one or more images, process the image data using the parallel pipelines, and provide report data 312 generated from the image data to one or more client devices 302 (e.g., devices 302A, 302B, 302C, or 302D). The one or more client devices 302 may be, for example, desktop computers, tablet computers, mobile phones, or intelligent, multi-sensing, network-connected home devices (e.g., a display assistant device). Each client device 302 can collect the report data 312 from the electronic device 100, receive user inputs, execute user applications, and present the report data 312 or other information on its user interface. In some embodiments, a user application includes an interactive user application. A user interface of the interactive user application is displayed on the client device to receive the user inputs associated with the electronic device 100 and visualize the report data 312 generated by the electronic device 100.

The electronic device 100 is configured to enable a plurality of parallel pipelines. The electronic device 100 identifies a plurality of image processing cycles associated with a temporal sequence of triggers, and each image processing cycle is created in response to one or more respective trigger events (e.g., one or more image capturing operations). The plurality of image processing cycles is assigned to a plurality of parallel pipelines. A pre-existing cycle data container is directly pulled from a cycle data pool for each parallel pipeline. The electronic device processes the plurality of image processing cycles in the plurality of parallel pipelines to generate respective report data independently of one another. In some embodiments, the temporal sequence of triggers correspond to an ordered sequence of images that is processed during the image processing cycles. The report data 312 of the image processing cycles is generated separately from the plurality of parallel pipelines, independently of the order of the sequence of images. In some situations, the report data of the image processing cycles is organized and provided to the client device 302 according to the order of the corresponding sequence of images.

In some embodiments, the user application implemented on the client device 302 is driven by a first programming language, and the plurality of image processing cycles are executed on the electronic device 100 by a second programming language distinct from the first programming language. The plurality of image processing cycles is configured to exchange instructions and data with the user application automatically via an intermediate data representation between the first and second programming languages. For example, the intermediate data representation is implemented in JSON (JavaScript Object Notation). The user application includes a web-based user interface, and the first programming language includes JavaScript. A runtime associated with the image processing cycles uses the second language (e.g., C++). JSON is a native format for the runtime by building JSON support into nearly every runtime C++ object, thereby allowing the JavaScript program to understand a workflow format or a report format that is used by the runtime automatically.

In some embodiments, the report data 312 or user inputs are processed locally at the client device 302 and/or remotely by the server(s) 304. The one or more servers 304 provide system data (e.g., boot files, operating system images, and user applications) to the client devices 302, and in some embodiments, process the report data 312 and user inputs received from the client device(s) 302 when the user application is executed on the client devices 302. In some embodiments, the data processing environment 300 further includes a storage device 306 for storing data related to the servers 304, client devices 302, electronic device 100, and user applications executed on the client devices 302. For example, the storage device 306 may store video content, static visual content, and a product database.

The one or more servers 304, the one or more client devices 302, the electronic device 100, and the storage device 306 are communicatively coupled to each other via one or more communication networks 308, which are the medium used to provide communications links between these devices and computers connected together within the data processing environment 300. The one or more communication networks 308 may include connections, such as wire, wireless communication links, or fiber optic cables. Examples of the one or more communication networks 308 include local area networks (LAN), wide area networks (WAN) such as the Internet, or a combination thereof. The one or more communication networks 308 are, optionally, implemented using any known network protocol, including various wired or wireless protocols, such as Ethernet, Universal Serial Bus (USB), FIREWIRE, Long Term Evolution (LTE), Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol. A connection to the one or more communication networks 308 may be established either directly (e.g., using 3G/4G connectivity to a wireless carrier), or through a network interface 310 (e.g., a router, a switch, a gateway, a hub, or an intelligent, dedicated whole-home control node), or through any combination thereof. As such, the one or more communication networks 308 can represent the Internet of a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers, consisting of thousands of commercial, governmental, educational and other electronic systems that route data and messages.

In some embodiments, the electronic device 100 is communicatively coupled to the client device 302 (302A) via a wired communication link. In some embodiments, the electronic device 100 is communicatively coupled to the client device 302 (302A) via a local communication network 314 enabled by the network interface 310. Both the electronic device 100 and client device 302 (e.g., 302A) are located in the same venue (e.g., a warehouse or a factory). In some embodiments, the electronic device 100 is remote from the client device 302, and communicatively coupled to the client device 302 (e.g., devices 302B, 302C, and/or 302D) via at least a WAN.

Figure 4 illustrates a process 400 of processing image data in a plurality of parallel pipelines 402 (e.g., 402A, 402B, and 402C), in accordance with some embodiments. The process 400 is implemented by an electronic device 100 having memory 206 and one or more processors 202. For example, the process 400 is executed by the processors 202 according to instructions provided by an image acquisition and processing module 240 of the electronic device 100. The electronic device 100 identifies a plurality of image processing cycles 404 associated with a temporal sequence of triggers (e.g., acquisitions of images). Each image processing cycle 404 (e.g., 404A, 404B, and 404C) is created in response to one or more respective trigger events (e.g., capturing a single image or capturing a set of images). The plurality of image processing cycles 404 is assigned to a plurality of parallel pipelines 402. For each parallel pipeline 402, a pre-existing cycle data container 406 (e.g., 406A) is pulled from a cycle data pool 408. In some embodiments, the cycle data pool 408 includes a predefined number of cycle data containers 406 prior to identifying the plurality of image processing cycles 404. Once assigned to a respective image processing cycle 404, each parallel pipeline 402 directly uses one of the predefined number of cycle data containers 406 without waiting for creation of a new cycle data container 406. This expedites initiation and execution of each parallel pipeline 402. In some situations, the cycle data containers 406 have been fully used with different pipelines 402, and no cycle data container 406 can be pulled for a pipeline 402 assigned with a new image processing cycle 404.

After the plurality of image processing cycles 404 is assigned to the plurality of parallel pipelines 402, the plurality of image processing cycles 404 is processed in the plurality of parallel pipelines 402 independently of one another, thereby generating report data 312 (e.g., 312A, 312B, and 312C) independently. The report data 312 is provided to a client device 302 for further processing (e.g., storage, classification, analysis, and/or visualization). In some embodiments, the client device 302 is coupled to the electronic device 100 via a local communication network, and executes an interactive user application 412. For example, the client device 302 and the electronic device 100 are located in a factory automation network that has no access to the Internet. The interactive user application 412 includes a user interface configured to configure, adjust, and debug the electronic device 100 and its associated workflows and jobs locally. In some embodiments, the interactive user application 412 is web-based and implemented on the client device 302, which is coupled to a WAN (e.g., the Internet). For example, a web-based user interface is enabled in a browser-based user application 412. The browser-based user application 412 is served directly from the client device 302, and communicates with the electronic device 100 using HTTP and web sockets. A web-based user interface is presented to allow the client device 302 to configure, adjust, and debug the electronic device 100 and its associated workflows and jobs remotely.

In some embodiments, the process 400 enables highly interactive browser based user experience by exchanging data structures between the web-based user interface of the user application 412 and the runtime of the plurality of parallel pipelines 402. In some embodiments, the user application 412 is implemented based on Hypertext Transfer Protocol (HTTP), and the client device 302 executing the user application 412 includes an Internet of Things (IOT) device. In an example, configuration of the user application 412 and the pipelines 402 is done via a data exchange scheme using JavaScript Object Notation (JSON), allowing a JavaScript driven web-based user interface to interact natively with a core runtime implemented in C++ or other non-dynamic computer languages.

In some embodiments, a first trigger event of a first image processing cycle 404A precedes a second trigger event of a second image processing cycle 404B. Second report data 312B of the second image processing cycle 404B is provided to the client device 302 after first report data 312A of the first image processing cycle 404A, independently of whether the second report data 312B is available before or after the first report data 312A. Alternatively, in some embodiments, independently of the temporal order of the first and second trigger events, whichever one of the first and second report data 312A and 312B is first available is reported to the client device 302 first. If the second report data 312B of the second image processing cycle 404B is available before the first report data 312A of the first image processing cycle 404A, the second report data 312B is provided to the client device 302 before the first report data 312A. If the second report data 312B is available after the first report data 312A, the second report data 312B is provided to the client device 302 after the first report data 312A.

For each parallel pipeline 402, the pre-existing cycle data container 406 is pulled from a cycle data pool 408 and used to store cycle data 414 associated with the corresponding image processing cycle 404. For example, a first image processing cycle 404A is implemented in a first parallel pipeline 402A. First cycle data 414A includes image data associated with one or more respective trigger events of the first image processing cycle 404A and intermediate data that is generated by, and passed among, a plurality of stages of the first image processing cycle 404A. In some embodiments, the first cycle data 414A includes first report data 312A generated from the intermediate data and reported to the client device 302. In some embodiments, all of the image data, intermediate data, and report data of the first image processing cycle 404A is reported to the client device 302. Alternatively, in some embodiments, only the report data 312A of the first image processing cycle 404A is reported to the client device 302.

In an example, the electronic device 100 is configured to recognize a bar code in an image. A first image processing cycle 404A is created in response to a first trigger event 602 in which an image including a bar code is captured. The first cycle data 414 associated with the first image processing cycle 404 includes a serial number corresponding to the bar code. First report data 312A generated from the first image processing cycle 404 includes a product name and a price of a product.

In some prior art implementations, each pipeline has fixed stages, which are staggered so that a first stage of a current cycle runs concurrently with a second stage of a previous cycle that precedes the current cycle. In contrast, in various implementations of this application, the parallel pipelines 402 have no such limitation, and each parallel pipeline 402 is switched on for a corresponding image processing cycle 404 without any overhead. Each cycle's stages are run within the same pipeline 402, while the pipeline 402 includes a managed number of threads and is associated with a cycle data container 406 pulled from a cycle data pool 408.

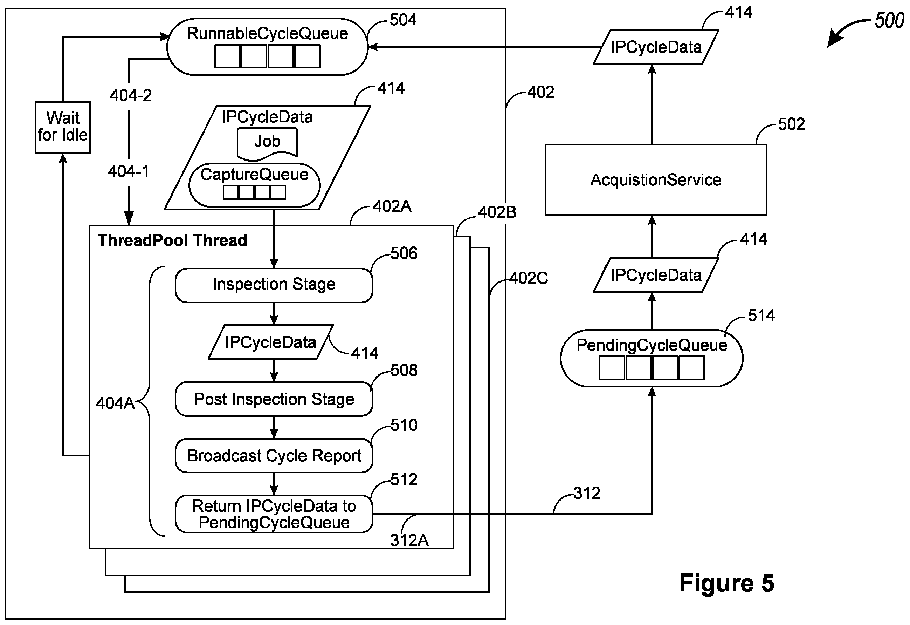

Figure 5 illustrates another example process 500 of processing image data in a plurality of parallel pipelines 402, in accordance with some embodiments. The process 500 is implemented by an electronic device 100 having memory 206 and one or more processors 202 (Figure 2). For example, the process 500 is executed by the processors 202 according to instructions provided by an image acquisition and processing module 240 of the electronic device 100. The electronic device 100 provides acquisition service 502, which identifies a plurality of image processing cycles 404 associated with a temporal sequence of triggers (e.g., acquisitions of images). Each image processing cycle 404 (e.g., 404A, 404B, and 404C) is created in response to one or more respective trigger events (e.g., capturing a single image, capturing a set of images). Based on a temporal order of the triggers, the plurality of image processing cycles is arranged in a runnable cycle queue 504. The plurality of image processing cycles 404 is assigned to a plurality of parallel pipelines 402. For each parallel pipeline 402, a pre-existing cycle data container 406 (e.g., 406A) is pulled from a cycle data pool 408. Cycle data 414 is associated with, or generated for, each image processing cycle 404 and stored in the corresponding cycle data container 406 during the course of managing and executing the image processing cycle 404.

In some embodiments, a first image processing cycle 404A is implemented in a first parallel pipeline 402A to inspect an input image, e.g., to detect smearing of a label on a drug bottle. The first image processing cycle 404A includes a plurality of stages, e.g., an inspection stage 506, a post inspection stage 508, a report generation stage 510, and a data returning stage 512. The input image is inspected in the inspection stage 506 and generated intermediate data stored with the cycle data 414 in the cycle data container 406A. The intermediate data is further processed in the post inspection stage 508 to provide additional information, which is used to generate first report data 312A in the report generation stage 510. The first report data 312A is placed in a queue of pending data 514 to be provided to the client device 302 in the data returning stage 512. In some embodiments, report data 312 is organized in the queue of pending data 514 based on a temporal order of associated trigger events. Alternatively, in some embodiments, report data 312 is organized in the queue of pending data 514 based on a temporal order of its own availability, independently of the temporal order of associated trigger events.

Each stage of an image processing cycle 404A is not limited by fixed hardware allocation, and has a flexible access to hardware resources allocated to a corresponding parallel pipeline 402A. Stated another way, each stage of the image processing cycle 404A can be either accelerated using all of the allocated pipeline hardware resources or executed in parallel with one or more remaining stages of the image processing cycle 404A.

In some embodiments, the plurality of image processing cycles 404 that is assigned to the plurality of pipelines 402 includes a plurality of first image processing cycles 404-1. The runnable cycle queue 504 further includes a plurality of second image processing cycles 404-2 following the first image processing cycles 404-1. When the plurality of pipelines 402 is fully occupied by the plurality of first image processing cycles 404-1, a state signal 516 (e.g., "wait for idle") is sent to the runnable cycle queue 504, requesting that the runnable cycle queue 504 hold the plurality of second image processing cycles 404-2 until the plurality of pipelines 402 completes processing of the plurality of first image processing cycles 404-1.

High precision instrumentation is built in, allowing a deep and intuitive understanding of the effects of adjusting the various performance parameters, including the loading of threads, processes, and cores, and hardware utilization. This capability is designed in such a way to permit a real-time performance visualizer in a web-based user interface. It also permits deep analysis during execution, with the potential for auto-adjusting parameters for maximum performance without user intervention. In some embodiments, while processing the plurality of first image processing cycles 404-1 in the plurality of parallel pipelines 402, the electronic device 100 dynamically adjusts one or more parameters of: a number of pipelines, a size of thread pools, thread priorities, delays, throttling parameters, core assignments, acquisition parameters, lighting , and camera focus. The plurality of second image processing cycles 404-2 is assigned to the plurality of parallel pipelines 402, and processed in the parallel pipelines 402 based on the one or more adjusted parameters. Specifically, in an example, the electronic device 100 monitors central processing unit (CPU) core utilization. Based on the CPU core utilization, the electronic device 100 dynamically adjusts respective computational resources allocated to the plurality of parallel pipelines. As such, parameters that control limits on hardware use (e.g., CPU core utilization) are dynamically tunable, and can be changed while running. It is possible to measure and automatically adjust these parameters to tailor the runtime for best performance depending on the situation.

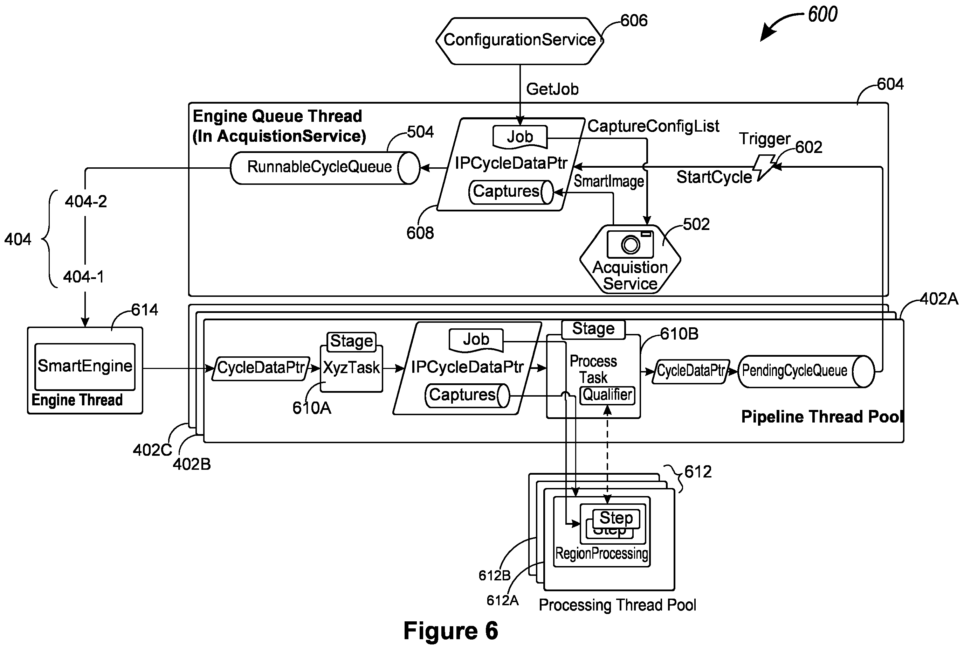

Figure 6 illustrates another example process 600 of processing image data in a plurality of parallel pipelines 402, in accordance with some embodiments. The process 600 is implemented by an electronic device 100 having memory 206 and one or more processors 202 (Figure 2). For example, the process 600 is executed by the processors 202 according to instructions provided by an image acquisition and processing module 240 of the electronic device 100. The electronic device 100 provides acquisition service 502, which identifies a plurality of image processing cycles 404 associated with a temporal sequence of triggers 602 (e.g., acquisitions of images) in an engine queue thread 604. Each image processing cycle 404 (e.g., 404A, 404B, and 404C) is created in response to one or more respective trigger events 602 (e.g., capturing a single image, capturing a set of images). In some embodiments, the electronic device 100 further includes configuration service 606, which provides job configurations applied to define (operation 608) the image processing cycles 404 to process the image data captured by the temporal sequence of triggers 602. Based on a temporal order of the triggers 602, the plurality of image processing cycles 404 is arranged in a runnable cycle queue 504. The plurality of image processing cycles 404 is assigned to a plurality of parallel pipelines 402. For each parallel pipeline 402, a pre-existing cycle data container 406 (e.g., 406A) is pulled from a cycle data pool 408. Cycle data 414 is associated with, or generated for, each image processing cycle 404 and stored in the corresponding cycle data container 406 during the course of managing and executing the image processing cycle 404.

A trigger event 602 includes acquisition of a single image, and the single image is processed in a corresponding image processing cycle 404. The single image is optionally processed via a plurality of stages 610 (e.g., 610A and 610B) that are managed in a single thread 612 or a plurality of threads 612 of the image processing cycle 404. Stated another way, in some situations not shown, a first stage 610A is implemented at least partially in parallel with a second stage 610B. In some embodiments, a plurality of trigger events 602 includes acquisition of a plurality of images. In response to the plurality of trigger events 602, an image processing cycle 404 is executed to process the plurality of images associated with the plurality of trigger events 602 in a plurality of stages 610. The plurality of stages 610 is optionally processed by a single thread 612 or a plurality of threads 612 of the image processing cycle 404. One of the plurality of images is optionally processed via a plurality of stages that are managed in an associated single thread 612 or a subset of the plurality of threads 612 of the image processing cycle 404. In an example, a stage 610B of image processing is implemented a subset of parallel threads 612. In some embodiments, the electronic device 100 successively implements each of a sequence of stages of an image processing cycle 404 using all or part of first hardware resources allocated to a corresponding parallel pipeline 402.

It is noted that a corresponding cycle data container 406 is populated with the plurality of images provided to the parallel pipeline 402. The cycle data container 406 optionally stores raw image data of the plurality of images or pre-processed image data of the plurality of images (e.g., filtered images, corrected images, associated image features). In some embodiments, an image signal processor (ISP) is configured to filter or correct the raw image data captured by a camera. Each image processing cycle 404 is configured to process the raw or pre-processed image data.

In some embodiments, a first image processing cycle 404 includes a first thread 612A and a second thread 612B. The second thread 612B optionally starts before or after the first thread 612. The first thread 612A generates a first subset of the first cycle data 414. The second thread 612B is initiated before generation of the first subset of the first cycle data 414, and suspended to wait until the first subset of the first cycle data 414 is generated and provided by the first thread 612A.

In some embodiments, a workflow template is loaded on the first parallel pipeline 402A. The plurality of stages 610 of the first image processing cycle 404A is implemented without being interrupted by the remaining image processing cycles (e.g., 402B and 402C in Figure 4). A plurality of stages 610 of a distinct image processing cycle 404 may be implemented in a second parallel pipeline 402B using an identical or different workflow template. There is no overhead to switch between workflow templates while implementing these two image processing cycles separately in two pipelines 402.

In some embodiments, the plurality of stages 610 of an image processing cycle 404 is forced to follow a temporal sequencing with a previous image processing cycle. This makes certain operations (e.g. sending result data) happen in sequence between cycles. For example, both of the image processing cycles 404A and 404B are processed by the first parallel pipeline 402A, and the second image processing cycle 404B follows the first image processing cycle 404A. The stages 610 of the second image processing cycle 402B is forced to follow a temporal sequencing with the first image processing cycle 402A. First report data 312A generated by the first image processing cycle 402A is optionally used by the second image processing cycle 402B.

The electronic device 100 includes a state managed asynchronous runtime engine 614 configured to keep a runtime in a known state. Instead of individual commands to change parameters or having to set a mode to perform an operation, the state of the runtime is always coherent, and can only be changed to a new state (or not if the new state is not accepted). This eliminates much of the complication of managing user experience (for example, undo is trivial). In some embodiments, the state used by an image processing cycle 404 is included in cycle data 414 stored in the cycle data container 406. The cycle data 414 flows through the stages and operations of the image processing cycle 404 implemented in the parallel pipeline 402. Application of the cycle data in the cycle data container 406 maximizes parallelism with other services, such as image acquisition. The cycle data container 406 contains all the information needed to complete the objective for the corresponding image processing cycle 404, and can be completely swapped for a new objective on the next image processing cycle 404.

In some embodiments, the cycle data 414 further includes input queues for data that is obtained or generated during execution of a parallel pipeline 402. For example, acquisition of images is optionally overlapped with other processing, and the images are pushed to a queue within the cycle data 414, when a stage 610 needs the image data and there is a potential to block if the data has not arrived yet.

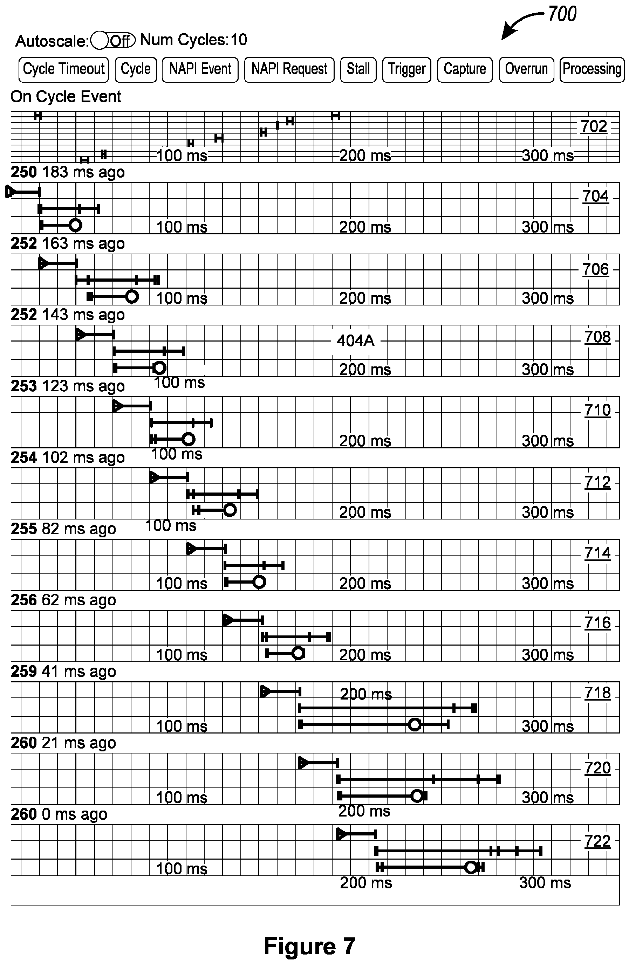

Figure 7 is a temporal diagram 700 of a plurality of image processing cycles 404 implemented in a plurality of parallel pipelines 402, in accordance with some embodiments. Each of the plurality of image processing cycles 404 is processed in a respective parallel pipeline 402, independently of remaining image processing cycles in respective remaining parallel pipelines. The diagram 700 includes ten signal lanes, and each signal lane corresponds to an individual pipeline and displays a respective cycle state signal 702, 704, 706, 708, 710, 712, 714, 716, 718,720, or 722. On each signal lane, a respective one of the cycle status signal 702-722 is associated with a sequence of time stamps and indicates progress of a respective image processing cycle implemented by a respective parallel pipeline 402. Ten respective cycle status signals 702-722 are displayed in a synchronous manner on the ten signal lanes of the diagram 700. In some embodiments, each of the cycle status signals 702-722 includes a plurality of line segments or bars corresponding to a plurality of imaging stages (e.g., triggering, acquisition, setting up, decoding, image processing). The plurality of line segments or bars are optionally coded with different colors. Different cycle status signals 702-722 are sorted, grouped, and filtered to show relationships among sequential barcode reading operations, and show how different image processing events overlap and interact with one another. In some embodiments, a cursor is moved on a corresponding user interface to hover over one of different bars of the cycle status signals 702-722 to highlight relationships among traces of the ten cycle status signals 702-722.

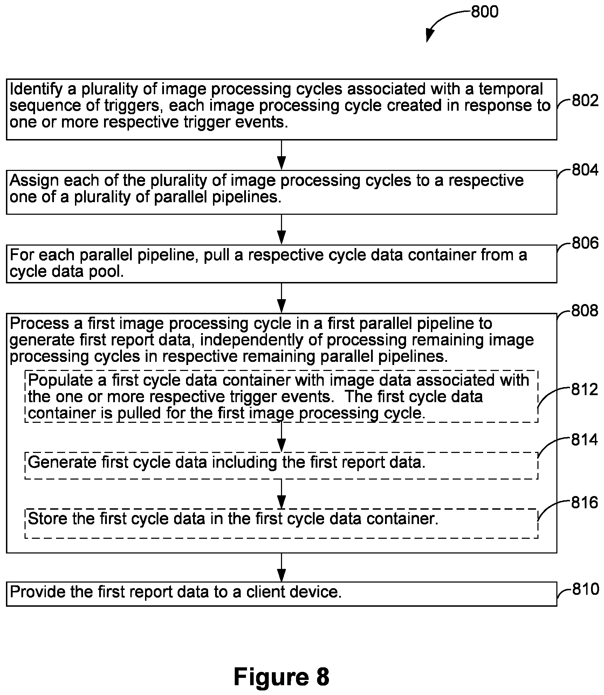

Figure 8 is a flow diagram of a method 800 for processing image data, in accordance with some embodiments. The method is implemented by an electronic device 100, particularly by an image acquisition and processing module 240 of the electronic device 100. In some embodiments, the electronic device 100 includes one or more cameras 112 configured to capture images. In some embodiments, the electronic device 100 is coupled to a camera or a distinct electronic device having a camera, and configured to acquire image data including a sequence of images.

The electronic device 100 identifies (802) a plurality of image processing cycles 404 associated with a temporal sequence of triggers 602. Each image processing cycle 404 is created in response to one or more respective trigger events. Each trigger event includes acquisition of a respective image. The electronic device 100 assigns (804) the plurality of image processing cycles 404 to a plurality of parallel pipelines 402. For each parallel pipeline 402, a respective cycle data container 406 is pulled (806) from a cycle data pool 408. The electronic device 100 processes (808) a first image processing cycle 404A in a first parallel pipeline 402A to generate first report data, independently of processing remaining image processing cycles 404 (e.g., 404B and 404C in Figure 4) in respective remaining parallel pipelines 402. The first report data is provided (810) to a client device 302 (e.g., 302A in Figure 3), e.g., for display on a web-based user interface of the client device 302.

In some embodiments, a trigger event includes acquisition of a single image, and the single image is processed in a corresponding image processing cycle 404. Alternatively, in some embodiments, a plurality of trigger events includes acquisition of a plurality of images, and in response to the plurality of trigger events, an image processing cycle 404 is executed to process the plurality of images associated with the plurality of trigger events. In the first processing cycle 404A, the plurality of trigger events is processed by a plurality of threads. In some situations, a first thread 612A (Figure 6) generates a first subset of first cycle data 414A to be applied by a second thread 612. The second thread 612 is initiated, and suspended to wait until the first subset of the first cycle data 414A is generated and made available by the first thread.

In some embodiments, the cycle data pool 408 includes a predefined number of cycle data containers 406 prior to identifying the plurality of image processing cycles 404. Once assigned to a respective image processing cycle 404, each parallel pipeline 402 directly uses one of the predefined number of cycle data containers 406 without waiting for creation of the cycle data container 406. This expedites initiation and execution of each parallel pipeline 402. In some situations, the predefined number of cycle data containers is fully used with different pipelines 402, and no cycle data container 406 can be pulled for a pipeline 402 assigned with a new image processing cycle 404.

In some embodiments, processing the first image processing cycle 404A further includes populating (812) a first cycle data container 406A with image data associated with the one or more respective trigger events associated with the first image processing cycle 404A, generating (814) first cycle data 414A including the first report data 312A, and storing (816) the first cycle data 414A in the first cycle data container 406A. In some embodiments, after the first image processing cycle 404A is completed, data stored in the first cycle data container 406A is purged, and the first cycle data container 406A is returned to the cycle data pool 408, waiting to be pulled and used with a next parallel pipeline 402. In some embodiments, the report data 312A reported to the client device 302 for the first image processing cycle 404A includes all of the first cycle data 414A and the image data. The first cycle data includes all intermediate or final data generated by the first parallel pipeline 402A. The client device 302 stores the report data 312 in a database (e.g., in storage 306), visualizes the report data 312, controls the report data 312, and the like.

In some embodiments, the first image processing cycle 404A includes a first thread 612A and a second thread 612B. The first image processing cycle 404A is processed in the first parallel pipeline 402A by sequentially generating a first subset of the first cycle data by the first thread 612A, initiating the second thread 612B before generation of the first subset of the first cycle data, and suspending the second thread 612B to wait until the first subset of the first cycle data is generated by the first thread 612A.

In an example, the first image processing cycle 404A is created in response to a first trigger event. The first trigger event includes acquisition of an image including a bar code. The first cycle data includes a serial number corresponding to the bar code. The first report data includes a product name and a price of a product. In another example, the first image processing cycle 404A is created in response to a first trigger event. The first trigger event includes acquisition of an image of a label attached to a drug bottle. in some embodiments, the first report data includes the image of the label. The client device 302 receives the image of the label, determines that the label in the image is damaged, and displays the image of the label with a message indicating that the label on the drug bottle is damaged. Alternatively, in some embodiments, the electronic device 100 determines that the label in the image is damaged and generates the first report data 312A including the message indicating that the label on the drug bottle is damaged. The client device 302 receives the message and displays the message without the image of the label.

In some embodiments, the first cycle data 312A includes intermediate data that is generated by, and passed among, a plurality of stages of the first image processing cycle 404A and used to generate the first report data, and a plurality of data items of the intermediate data forms a queue and is stored in in the first cycle data container 406A successively.

In some embodiments, the temporal sequence of triggers corresponds to an ordered sequence of images processed during the plurality of image processing cycles 404 assigned to the plurality of parallel pipelines 402. A first image is acquired prior to a second image, and report data 312 corresponding to the first image is provided to the client device prior to report data 312 corresponding to the second image.

In some embodiments, the first image processing cycle 404A is created in response to a plurality of trigger events, and each of the plurality of trigger events includes acquisition of a respective image. In some situations, while waiting a later trigger event, the pipeline 402 starts processing of an earlier trigger event in the first image processing cycle 404A.

In some embodiments, the first image processing cycle 404A includes a first stage 610A and a second stage 610B (Figure 6). The first image processing cycle 404A in the first parallel pipeline 402A is processed by implementing part of the first stage 610A and part of the second stage 610B in parallel.

In some embodiments, the first image processing cycle 404A includes a sequence of stages (e.g., 506-512 in Figure 5). The first image processing cycle 404A is processed in the first parallel pipeline 402A by successively implementing each of the sequence of stages using first hardware resources allocated to the first parallel pipeline 402A.

In some embodiments, subsequently to the first image processing cycle 404A, the electronic device processes a second image processing cycle 404A distinct from the plurality of image processing cycles 404 in a second parallel pipeline 402B. After providing the first report data 312A to the client device, the electronic device 100 provides second report data to the client device 302. In some embodiments, the second report data is visualized on a user interface of the client device 302. In some embodiments, a first trigger event of a first image processing cycle 404A precedes a second trigger event of a second image processing cycle 404B. Second report data 312B of the second image processing cycle 404B is provided to the client device 302 after first report data 312A of the first image processing cycle 404A, independently of whether the second report data 312B is available before or after the first report data 312A. Alternatively, in some embodiments, independently of a temporal order of the first and second trigger events, whichever one of the first and second report data 312A and 312B is available first is reported to the client device 302 first. If the second report data 312B of the second image processing cycle 404B is available before the first report data 312A of the first image processing cycle 404A, the second report data 312B is provided to the client device 302 before the first report data 312A. If the second report data 312B is available after the first report data 312A, the second report data 312B is provided to the client device 302 after the first report data 312A.

In some embodiments, the first image processing cycle 404A is implemented in the first parallel pipeline 402A by loading a workflow template on the first parallel pipeline 402A and in accordance with the workflow template, implementing a plurality of stages of the first image processing cycle 404A without being interrupted by the remaining image processing cycles 404.

In some embodiments, the electronic device 100 monitors central processing unit (CPU) core utilization. Dynamically based on the CPU core utilization, respective computational resources allocated to the plurality of parallel pipelines 402 are adjusted. This is implemented automatically and without user intervention. High precision instrumentation is built in, allowing a deep and intuitive understanding of the effects of adjusting the various performance parameters, including the loading of threads, processes, and cores, and hardware utilization. In some embodiments, computer performance is visualized in a user interface of the client device 302. Computer performance is analyzed in real time during execution, with the potential for auto-adjusting parameters that enhances performance without user intervention.

In some embodiments, the plurality of image processing cycles 404 includes a plurality of first image processing cycles 404-1 (Figures 5 and 6). While processing the plurality of first image processing cycles 404-1 in the plurality of parallel pipelines 402, the electronic device 100 dynamically adjusts one or more parameters of: a number of pipelines, a size of thread pools, thread priorities, delays, throttling parameters, core assignments, acquisition parameters, lighting , and camera focus. A plurality of second image processing cycles 404-2 follows the plurality of first image processing cycles 404-1. The electronic device assigns the plurality of second image processing cycles 404 to the plurality of parallel pipelines 402. Based on the one or more adjusted parameters, the plurality of second image processing cycles 404-2 is processed in the plurality of parallel pipelines 402.

In some embodiments, the client device 302 executes an interactive user application. The electronic device 200 enables display of a user interface" and displays the first report data on the user interface of the client device 302. Further, in some embodiments, the user application is driven by a first program language, and the plurality of image processing cycles 404 are executed by a second program language distinct from the first program language, wherein the plurality of image processing cycles 404 is configured to exchange instructions and data with the user application automatically via an intermediate data representation between the first and second program languages. In some embodiments, the interactive user application is locally implemented on the client device 302, which is coupled to the electronic device via a wired communication link or a local communication network. In some embodiments, the interactive user application is web-based and implemented on the client device 302, which is coupled to the electronic device via a WAN (e.g., the Internet). For example, a web-based user interface is enabled in a browser-based application, which is served directly from the client device 302 and communicates with the electronic device 100 using HTTP and web sockets. The user interface is enabled for defining, setting up, adjusting, and debugging the electronic device 100 and its associated workflows and jobs.

In some embodiments, the first image processing cycle 404A is implemented on an electronic device 100, which is coupled to the client device via a local communication network.

In one aspect of this application, a multi-process optimization application is implemented in factory automation. Quality control requires monitoring and iterative tuning of a plurality of system settings (e.g., including camera settings, image processing settings, processor settings). Examples of critical system settings include, but are not limited to, image capture times in a plurality of image processing cycles, which require a sequence of images to be captured at precise times or with precise intervals. Some embodiments include high-precision instrumentation and interactive analysis of complex multi-process and multi-core applications, and are used to set up embedded devices in real time in factory automation scenarios. In some embodiments, the plurality of image processing cycles generates data of a wide variety of event types, including I/O timing, signal data, performance metrics, image data, and associated data changes at one or more time precision levels. The data generated by the image processing cycles is dynamically consolidated to maintain insights over time. An interactive oscilloscope-style user interface enables real-time visualization, manipulation, and intuitively tuning of system settings, thereby improving an iterative trial-and-error process. This oscilloscope-style user interface facilitates tuning of a software application 230 (Figures 2), which acquires images containing labels (e.g., barcodes) and decodes the labels, and provides users with unprecedented insights into behaviors of an electronic device 100 in the image processing environment 300.

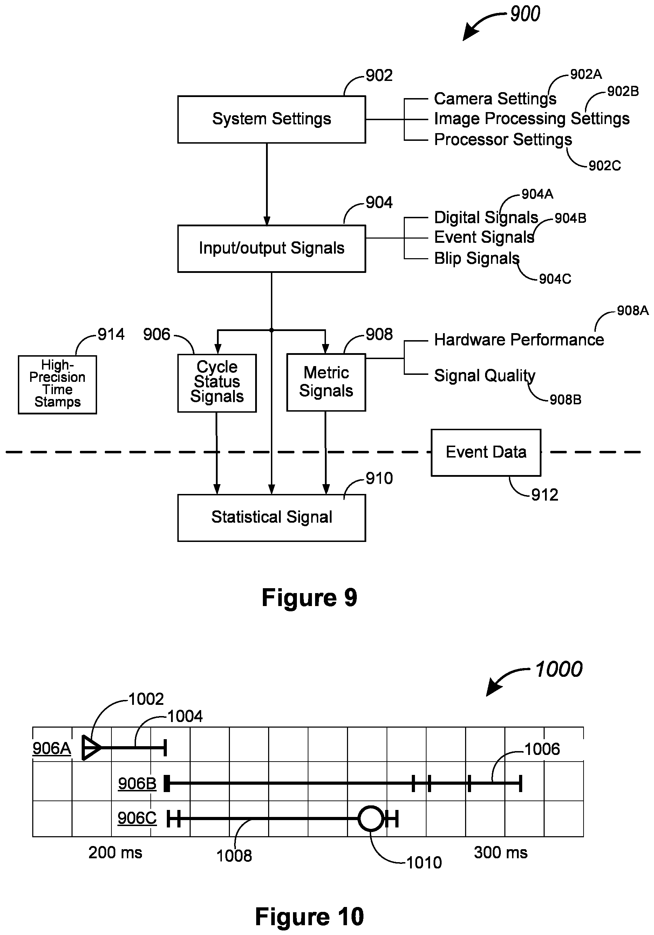

Figure 9 is a diagram of a data structure 900 for signals and data applied in an image processing environment 300, in accordance with some embodiments. An electronic system includes an electronic device 100 including a camera and a computer device 302 for visualizing signals and data. The electronic system implements a plurality of image processing cycles 404 (Figure 4) associated with a temporal sequence of triggers 602, and each image processing cycle 404 is created in response to one or more respective trigger events 602 (Figure 6). The electronic system includes system settings 902 used to set up the plurality of image processing cycle 404. During the image processing cycles 404, the electronic system obtains a plurality of input/output (I/O) signals 904 that are optionally obtained at an input or output interface of the electronic system. Based on the plurality of I/O signal 904, the electronic system generates a plurality of cycle status signals 906, and each cycle status signal 906 is associated with a sequence of time stamps 914 and indicates progress of a respective image processing cycle 404. In some embodiments, the cycle status signal 906 are generated with high precision, and the sequence of time stamps 914 has a temporal resolution that is higher than a predefined resolution (e.g., every two successive time stamps having a temporal difference less than 20 nanoseconds (ns)). For example, the predefined resolution is 20 ns, and the temporal resolution is optionally 2 ns, 5 ns, 10 ns, and 13ns.

In some embodiments, the system settings 902 include a set of job configurations, and the electronic system includes configuration service 606 (Figure 6) in which the set of job configurations is applied to define the image processing cycles 404 to process image data captured in response to the temporal sequence of triggers 602. In some embodiments, the system settings 902 (e.g., the job configurations) of the electronic system include, but are not limited to, one or more of: camera settings 902A, image processing settings 902B, and processor settings 902C. Examples of the camera settings 902A include, but are not limited to, a camera exposure time, a focal length, and a gain. Examples of the image processing settings 902B include, but are not limited to, image filtering options, lighting parameters, windows of interest (WOI), color conversions, linear and non-linear calibration settings, contrast correction, and histogram normalization. Examples of the processor settings 902C include, but are not limited to, a thread pool size, thread priorities, thread affinity (core assignments), trigger delays, stack sizes, timeouts, throttling, and a heartbeat frequency. In some embodiments, the system settings 902 further include application settings of a software application 230 (Figure 2). The application settings include user-configurable settings (e.g., a symbology types, thresholds, region of interest (ROI) sizes) and internal system settings (e.g., thread priorities, delays, timeouts, network usage). The application settings optionally overlap with the image processing settings 902B or the processor settings 902C.

In some embodiments, the plurality of I/O signals 904 is obtained from two or more sources, and associated with time stamps 914 that are correlated according to a precision time protocol. Each source includes an internal source or an external source. An example of the precision time protocol is IEEE 1588. In some embodiments, the plurality of I/O signals 904 includes one or more of: digital signals 904A, event signals 904B, and blip signals 904C. In an example, the plurality of I/O signals 904 includes one or more images captured in response to each trigger 603, a trigger signal of each trigger 602, and barcode information extracted from the one or more images. In some embodiments, a digital signal 904A has a low-to-high transition edge and a high-to-low transition edge, and one or both of these edges corresponds to a virtual or physical I/O event. In some embodiments, the event signals 904B are obtained for one or more of: errors or exceptions, a mode change, a receipt of external command, a process or trigger overrun, a mismatch of data, an unexpected serial number, a stop event, a start event, an external device connect, and/or an external device disconnect. In some embodiments, the blip signals 904C indicate time durations associated with the electronic system, parallel pipelines 402 (Figure 4), and threads 612 (Figure 6). Examples of the blip signals 904 include, but are not limited to, start and end times for image acquisition, image processing, pre-processing, post-processing, formatting, report generation, network transfer, and parsing. Further, in some embodiments, the blip signals 904 are stored with image thumbnails and identifiers of full resolution images.

Further, in some embodiments, the electronic system further includes one or more metric signals 908 indicating overall system performance associated with the plurality of image processing cycles 404. The one or more metric signals 908 is optionally measured directly by the electronic system or generated based on the I/O signals 904. In some embodiments, the one or more metric signals 908 includes hardware performance signals 908A and signal quality signals 908B. Examples of the hardware performance signals 908A include, but are not limited to, image acquisition times, a CPU load, a core temperature, a memory usage level, a number of threads, network traffic, and parameter changes. In some embodiments, a subset of metric signals 908 include secondary signals generated based on real time analysis of the I/O signals 904. For example, a duration of time is measured between transitions of a digital signal 904 to determine a duty of cycle, a period of time (e.g., a pulse width), a high level time, a low-time level, and a frequency, which correspond to the secondary signals of the digital signal 904 and behave as analog signals for further processing and rendering.

Additionally, in some embodiments, the electronic system generates one or more statistical signals 910 based on a subset of the system settings 902, the cycle status signals 906, the I/O signals 904, and one or more metric signals 908. For example, the one or more statistical signals 910 include one or more of a mean, a median, a minimum, a maximum, a variance, a histogram, and an outlier of image capture times that are set in response to trigger events 602. In some situations, the statistical signals 910 are visualized as a histogram, a trend chart, a scatter diagram, or the like.

In some embodiments, an event is identified based on the system settings 902 and signals 904-910, and a subset of the system settings 902 and signals 904-910 is organized as event data 912 according to the event for further data storage and/or visualization. In some embodiments, the event corresponds to the event signals 904B that are directly measured in association with the event. Alternatively, in some embodiments, the event is detected based on the system settings 902 and signals 904-910 in real time. Examples of the event include, but are not limited to, a physical input/output event, a topic publication event, and a topic subscription event.

Some implementations of this application are directed to easy and efficient event recording. In some embodiments, the image processing environment 300 is configured to record different types of events with an adaptive timestamp precision and an adaptive data format. Event data 912 include digital signals, metric signals, errors or exceptions (with included data like stack traces), execution timings, contextual information, image acquisition times and thumbnails, counts, and more. By these means, data recording is simple to use and implemented with a controlled overhead, thereby allowing the electronic system to receive data from a plurality of sources ranging from shared-memory to networks, which comply with a User Datagram Protocol (UDP), a Transmission Control Protocol (TCP), or WebSocket.

Figure 10 is a temporal diagram 1000 of an image processing cycle 404 implemented in one of a plurality of parallel pipelines 402, in accordance with some embodiments. An electronic system implements a plurality of image processing cycles 404 (Figure 4) associated with a temporal sequence of triggers 602, and each image processing cycle 404 is created in response to one or more respective trigger events 602 (Figure 6). During the image processing cycle 404, the electronic system obtains a plurality of input/output (I/O) signals 904 that are optionally obtained at an input or output interface of the electronic system. Based on the plurality of I/O signal 904, the electronic system generates one or more cycle status signals 906 for each image processing cycle 404, and each cycle status signal 906 is associated with a sequence of time stamps 914 and indicates progress of the respective image processing cycle 404. In some embodiments, the cycle status signal 906 are generated with high precision, and the sequence of time stamps 914 has a temporal resolution that is higher than a predefined resolution (e.g., every two successive time stamps having a temporal difference less than 20 nanoseconds (ns)).

In some embodiments, the temporal diagram 1000 corresponds to one of the plurality of signal lanes. On each signal lane, the one or more cycle status signals 906 indicate progress of a respective image processing cycle 404 implemented by a respective parallel pipeline 402. For example, the cycle status signals 906 includes an image acquisition status signal 906A, a pipeline thread state signal 906B, and an image processing thread state signal 906C. The image acquisition status signal 906A includes a trigger event indicator 1002 representing a trigger event 602 (Figure 6) and an image acquisition status bar 1004. The pipeline thread state signal 906B includes an extended line having a plurality of segments 1006, and each segment represents a respective stage of a pipeline thread. The image processing thread state signal 906C includes an extended line having a plurality of segments 1008 and a circular indicator 1010, which indicates detection of a barcode on an image captured in response to the trigger event 602. The cycle status signals 906 include a plurality of segments 1006 and 1008 corresponding to a plurality of imaging stages (e.g., triggering, acquisition, setting up, decoding, image processing). The plurality of segments are optionally coded with different colors.

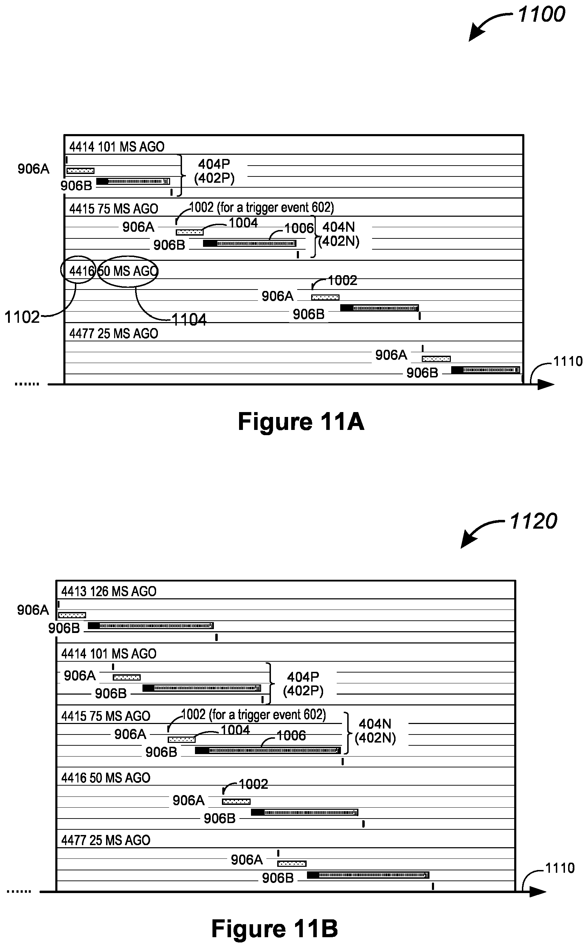

Figures 11A-11D are four example temporal diagrams 1100, 1120, 1140, and 1160 of a plurality of image processing cycles 404, in accordance with some embodiments. Each temporal diagram 1100, 1120, 1140, or 1160 visualizes cycle status signals 906 of the plurality of image processing cycles 404 in a plurality of parallel signal lanes. The plurality of parallel signal lanes is arranged in a stacked manner, and the cycle status signals 906 of different signal lanes are displayed with respect to the same temporal axis 1110 in a synchronous manner. Stated another way, each cycle status signal 906 is associated with a sequence of time stamps 914, and the cycle status signals 906 of the plurality of image processing cycles 404 are synchronized with one another. On each signal lane, the one or more cycle status signals 906 indicate progress of a respective image processing cycle 404 implemented by a respective image processing pipeline 402. In some embodiments, each signal lane includes a cycle identification 1102 and a cycle time 1104 indicating how long ago a corresponding image was captured.

Referring to Figures 11A and 11B, in some embodiments, the cycle status signals 906 of each image processing cycle 404 include at least an image acquisition status signal 906A and a pipeline thread state signal 906B. The image acquisition status signal 906A includes a trigger event indicator 1002 representing a trigger event 602 (Figure 6) and an image acquisition status bar 1004. The pipeline thread state signal 906B includes an extended bar having a plurality of segments 1006, and each segment 1006 represents a respective stage (e.g., pipeline setting up, decoding) of a pipeline thread. Further, in some situations (Figure 11A), the plurality of image processing cycles 404 are implemented by a single processor core (e.g., by a single image processing pipeline 402). After a prior image is completely processed in a prior image processing cycle 404P within the single image processing pipeline 402, a trigger event 602 of a next image processing cycle 404N occurs, and a next image is captured and then processed in the next image processing cycle 404N within a next image processing pipeline 402N. Alternatively, in some situations (Figure 11B), the plurality of image processing cycles 404 are implemented in a plurality of parallel pipelines 402. While a prior image is processed in a prior image processing cycle 404P within a prior image processing pipeline 402P, a trigger event 602 of a next image processing cycle 404N occurs and a next image is captured and then processed in a next image processing cycle 404N within a next image processing pipeline 402N. An overlap of the next image processing pipeline 402N with the prior image processing pipeline improves an image processing rate.

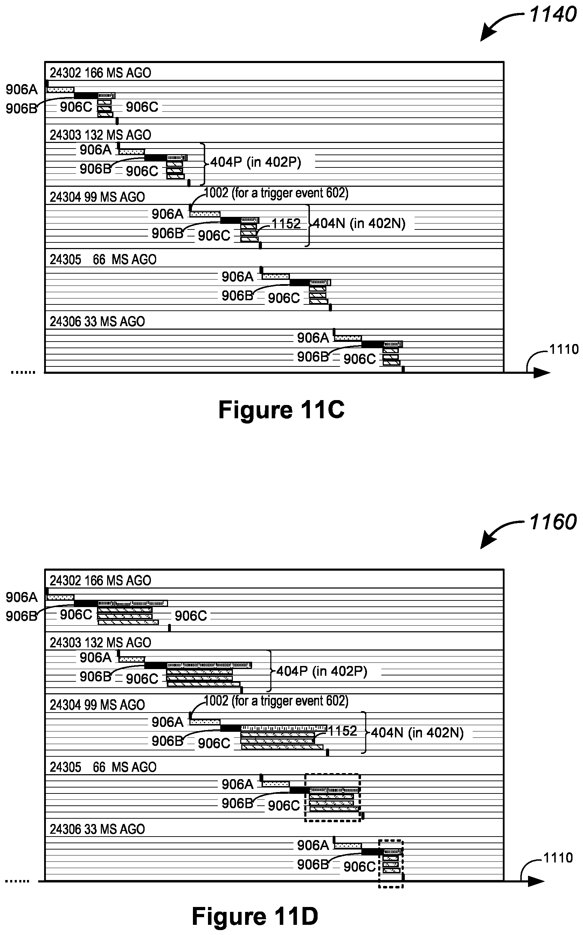

Referring to Figures 11C and 11D, in some embodiments, the cycle status signals 906 of each image processing cycle 404 includes an image acquisition status signal 906A, a pipeline thread state signal 906B, and a plurality of image processing thread state signal 906C. The pipeline thread state signal 906B and image processing thread state signal 906C are arranged in parallel with one another and aligned to the same portion of a temporal axis 1110 at least in part. The image processing thread state signal 906C includes a plurality of thread indicators 1152, indicating progress of a plurality of processing threads 612 (Figure 6). In some situations (Figure 11C), only after a prior image is completely processed in a prior image processing cycle 404P, a trigger event 602 of a next image processing cycle 404N occurs, and a next image is captured and then processed in the next image processing cycle 404N by a plurality of parallel threads 1152 of a single image processing pipeline 402. Alternatively, in some situations (Figure 11D), while a prior image is processed in a prior image processing cycle 404P of a prior image processing pipeline 402P, a trigger event 602 of a next image processing cycle 404N occurs, and a next image is captured and then processed by a plurality of parallel threads 1152 in the next image processing cycle 404N within the next image processing pipeline 402N. Further, in some embodiments, a combination of a plurality of image processing pipelines 402 and a plurality of processing threads 612 enhances a processing rate to be equal to or faster than an image frame rate at which a sequence of images is captured.

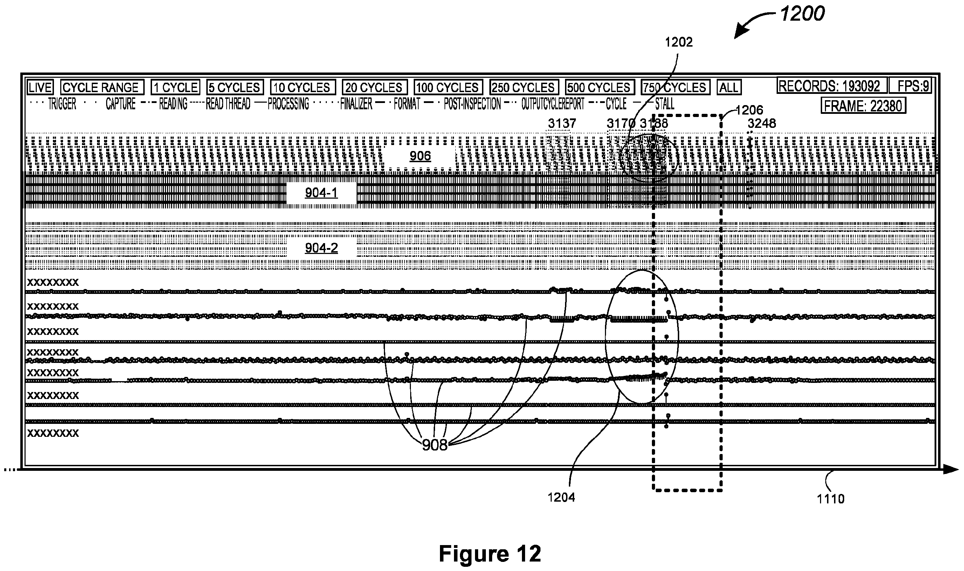

Figure 12 is an example collapsed graphical user interface (GUI) 1200 that visualizes signals of a plurality of image processing cycles 404 in an extended duration of time, in accordance with some embodiments. In some embodiments, a computer device (e.g. a client device 302 in Figure 3) executes a dedicated digital oscilloscope application (e.g., a software application 230 in Figure 2) and enables display of the user interface 1200 on a screen of the computer device. Alternatively, in some embodiments, a computer device (e.g. a client device 302 in Figure 3) enables display of the user interface 200 on its screen via a generic browser application. Progress of the plurality of image processing cycles 404 is tracked by a plurality of cycle status signals 906 that is visualized on the user interface 1200. Dynamically and in real time, while the image processing cycles 404 are implemented by an electronic system, the user interface 1200 visualizes the plurality of cycle status signals 906 concurrently with respect to at least a temporal axis 1100. In some embodiments, a subset of the plurality of I/O signals 904 is visualized concurrently with the plurality of cycle status signals 906, and each of the subset of the plurality of I/O signals 904-1 and 904-2 is displayed with respect to the temporal axis. In some embodiments, one or more metric signals 908 indicates overall system performance associated with the plurality of image processing cycles 404, and are visualized concurrently with the plurality of cycle status signals 906. Each of the one or more metric signals 908 is displayed with respect to the temporal axis 1100.

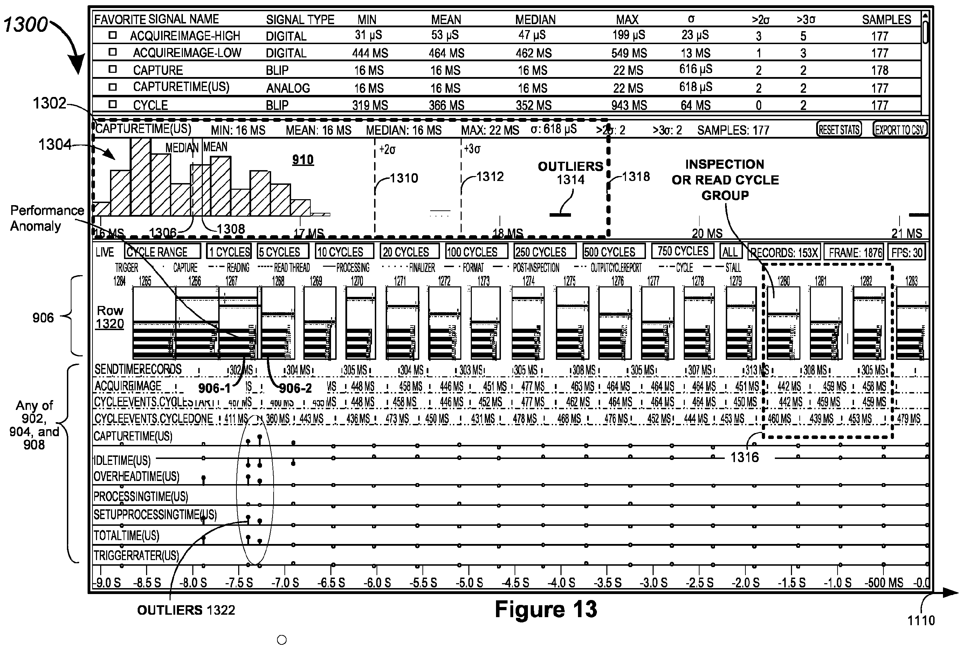

In some situations, given a length of the extended duration of time, each of the plurality of I/O signals 904-1 and 904-2 and the plurality of cycle status signals 906 is collapsed along the temporal axis 1100, and details of the signals 904-1, 904-2, and 906 are not discernable on Figure 12. Further, in some situations, a zoom operation is implemented on Figure 12 to expand the temporal axis 1100 to display at least the details of the signals 904-1, 904-2, and 906 in Figure 13. In some embodiments, despite a loss of the details of the signals 904-1, 904-2, and 906, a signal density shown on Figure 12 is applied to detect an anomaly event 1202 of the cycle status signals 906. Further, in some embodiments, the extended duration of time facilitates detection of another anomaly event 1204 (also called outlier 1204) of the metric signals 908 on the user interface 1200. Data associated with the anomaly events 1202 and 1204 is extracted and stored for further review and analysis. Such anomaly events 1202 and 1204 are optionally reported to a user of the user interface 1200 in real time by displaying an alert on the user interface 1200 or by including detection of an anomaly event in an output report.

Stated another way, in some embodiments, an outlier 1204 of at least one metric signal 908 is detected based on an outlier criterion. In response to detection of the outlier 1204, a portion of the at least one metric signal 908 associated with the outlier 1204 is highlighted on the user interface 1200. In some situations, in response to detection of the outlier 1204, additional coincident data is recorded to facilitate further review and analysis of the outlier 1204. Further, in some embodiments, the at least one metric signal 908 including two or more metric signals 908. The electronic system monitors a correlation of the two or more metric signals 908, and the outlier criterion is associated with a variation of the correlation. Additionally, in some embodiments, the at least one metric signal 908 includes one or more of: a CPU usage level, a CPU operation duration, a core temperature, a memory use, and a network bandwidth. In response to detection of the outlier 1204, an action is initiated to control CPU usage by a subset of the plurality of image processing cycles 404. By these means, the anomaly events are monitored and applied to adjust allocations of computational, storage, and/or network resources among the image processing cycles 404, allowing the resources to be used more efficiently.

The electronic system is configured for dynamic data summarization and consolidation with outlier detection. In some embodiments, the electronic system dynamically consolidates the recorded data (e.g., I/O signals 904) based on the age of the data. The most recent data is stored with higher precision, while older data is progressively summarized, maintaining key statistical information or downscaling image resolution while ensuring continued availability of historical information. Further, in some embodiments, outlier conditions are specified. In accordance with a determination that a subset of the settings 902 and signals 904-912 satisfies an outlier condition (i.e., in response to detection of the outlier condition), corresponding event data 912 includes the subset of the settings 902 and signals 904-912 and is stored for further review and analysis.

Figure 13 is another example user interface 1300 that visualizes signals of a plurality of image processing cycles 404, in accordance with some embodiments. A computer device (e.g. a client device 302 in Figure 3) executes a dedicated digital oscilloscope application (e.g., a software application 230 in Figure 2) or a generic browser application, and enables display of the user interface 1300 on a screen of the computer device. Compared with the user interface 1200 in Figure 12, the user interface 1300 corresponds to a temporal window 1206 (Figure 12) having a shorter duration of time, thereby providing more signal details. Progress of the plurality of image processing cycles 404 is tracked by a plurality of cycle status signals 906 that is visualized on the user interface 1300. Dynamically and in real time, while the image processing cycles 404 are implemented by an electronic system, the user interface 1300 visualizes the plurality of cycle status signals 906 concurrently with respect to at least a temporal axis 1100.

In some embodiments, the temporal axis 1100 includes a single temporal axis. For each cycle status signal 906, an active portion of the respective status signal 906 and an associated active duration of time are identified. In accordance with the associated active duration of time, the user interface 1300 displays the active portion of the respective cycle status signal 906 on a row 1320 with respect to the single temporal axis. For example, each cycle status signal 906 is cropped to the image processing thread state signal 906C that includes a plurality of thread indicators 1152. The thread indicators 1152 of a plurality of cycle status signals 906 are shifted to the same row 1320. Further, in some embodiments, in accordance with a determination that the active portion of a first cycle status signal 906-1 of a first image processing cycle and the active portion of a second cycle status signal 906-2 of a second image processing cycle overlap with one another on the single temporal axis, it is determined that at least one of the first image processing cycle and the second image processing cycle encounters an abnormal condition. In some embodiments, in accordance with a determination that the active portion of a first cycle status signal 906-1 of a first image processing cycle and the active portion of a second cycle status signal 906-2 of a second image processing cycle overlap with one another on the single temporal axis 1110, the electronic system automatically extends an inter-image time gap between two triggers 602 configured to enable capturing of two successive images.

In some embodiments, in response to detection of overlapping of two cycle status signals 906-1 and 906-2, the user interface 1300 is displayed such that an overlapping portion of each of the two cycle status signals is highlighted. Further, in some embodiments, in response to detection of overlapping of two cycle status signals 906-1 and 906-2, signals 902, 904, and 908 are monitored to identify outliers 1322 corresponding to an anomaly event, and the outliers 1322 are optionally highlighted on the user interface 1300.

In some embodiments, a subset of the plurality of I/O signals 904 (e.g., blip signals 904C) is visualized concurrently with the plurality of cycle status signals 906, and each of the subset of the plurality of I/O signals 904 is displayed with respect to the temporal axis 1100. In some embodiments not shown, one or more metric signals 908 indicates overall system performance associated with the plurality of image processing cycles 404, and are visualized concurrently with the plurality of cycle status signals 906. Each of the one or more metric signals 908 is displayed with respect to the temporal axis 1100.

In some embodiments, one or more statistical signals 910 are generated based on a subset of a plurality of system settings 902, the plurality of cycle status signals 906, the plurality of I/O signals 904, and one or more metric signals 908. The one or mor statistical signals 910 are visualized concurrently with the plurality of cycle status signals 906 and with respect to an axis distinct from the temporal axis 1110. Referring to Figure 13, in some embodiments, statistic signals 910 of image capture times 1302 are determined over extended time periods (e.g., for 177 image processing cycles 404). A histogram 1304 of the statistical signals of the image capture times 1302 is visualized on the user interface 1300, representing a distribution of the image capture times 1302 of the 177 image processing cycles 404. A median value 1306, a mean value 1308, a twice standard deviation value 1310, and a triple standard value 1312 are marked on the histogram 1304. One or more outliers 1314 are detected beyond the triple standard value 1312, and correlated with external and internal events. In some embodiments, event data 912 associated with the outlier 1314 is analyzed subsequently to occurrence of an anomaly.

In some embodiments, the electronic system enables display of the user interface 1300 on a screen of a computer device 302 via a browser application. The user interface 1300 enables an advanced, browser-based environment, and is analogous to a user interface of a digital oscilloscope. The user interface 1300 navigates across a wide range of time scales, and renders appropriate signals, events or data, which include I/O signals 904, cycle status signals 906, metric signals 908, timing durations, statistic signals 910, image thumbnails, and parameter information. The user interface 1300 provides an intuitive visual representation of behaviors of a software application 230 (Figure 2) over time. In some embodiments, the user interface 1300 enables one or more features of sorting, filtering, grouping, and recording.

In some embodiments, the electronic system enables interactive Data analysis. The user interface 1300 allows users to identify signal interactions, such as correlations between high CPU usage and operation duration, e.g., by offering features to track and display such relationships. These signal interactions trigger outlier detection and action. For example, if an outliner condition occurs that requires further review, event data 912 including relevant time records and statistics are permanently stored in a database 242 (Figure 2) for further review and analysis.

In some embodiments, the electronic system enables image-based Data rendering. The electronic system renders image-based data, making overlaps between images apparent. In an example, images of a long box moving on a conveyor belt are captured from a fixed camera position. The images have overlaps for comprehensive surface inspection. The electronic system allows users to visualize these overlaps on a time axis on the user interface 1300. In some embodiments, the user interface 1300 allows adjustment of inter-image timing based on one or more factors. Further, in some situations, inter-image timing is automatically inferred based on a subset of the signals 904-912.

In some embodiments, the image processing environment 300 is adjusted or optimized in real time. The user interface 1300 allows analysis of timing data for real-time system optimization. Based on the user interface 1300, a user can adjust system settings 902 interactively and in real time, while observing an impact of the system settings 902 on system performance reflected by the signals 904-912. In some embodiments, the signals 904-912 are analyzed using machine learning or other automated methods. Based on analysis results, the electronic system adjusts the system settings 902 automatically, dynamically, and in real time.

Referring to Figure 13, in some embodiments, the user interface 1300 further displays operations state signals distinct from the cycle status signals 906. For example, the operation state signals monitor offline conditions of the electronic device 100 when imaging-based inspection is not actively running. Specifically, in some embodiments, a method is implemented to track status of an electronic system configured for image processing or other operations, independently of whether the electronic system is active or offline. The electronic system obtains one or more of: a plurality of system settings 902, a plurality of input/output (I/O) signals 904 (e.g., from I/O interfaces), a plurality of status signals 906 (e.g., generated based on the I/O signals), a plurality of metric signals 908, and a plurality of statistical signals 910. In some embodiments, the electronic system identifies an data or anomaly event based on the settings 902 and/or signals 904-910. Dynamically and in real time, the electronic system visualizes at least a subset of the settings 902 and signals 904-910 concurrently with respect to at least a temporal axis on a user interface. This methos is used to analyze performance of the electronic system related to image processing, digital input/output, or other operations. For example, the electronic system is applied to analyze and find anomalies in timing between a stand-alone communication process and a programmable logic controller (PLC). In another example, the electronic system is applied to find performance issues for certain image-processing libraries under load. In some embodiments, a plurality of software applications 230 are executed concurrently to receive streams of timing data from a plurality of sources. Examples of applications include, but are not limited to, a setup software and a standalone data visualization and/or analysis application.

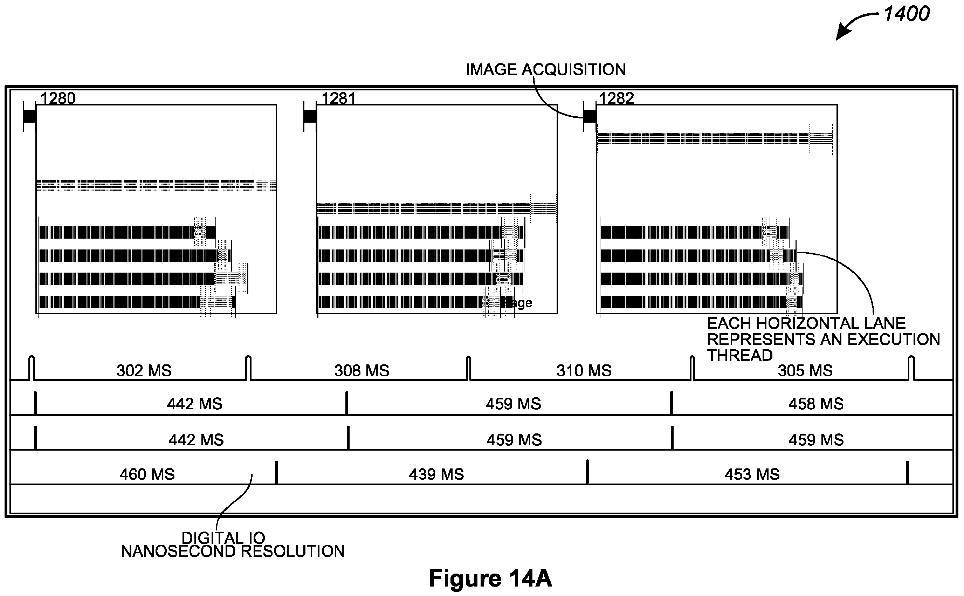

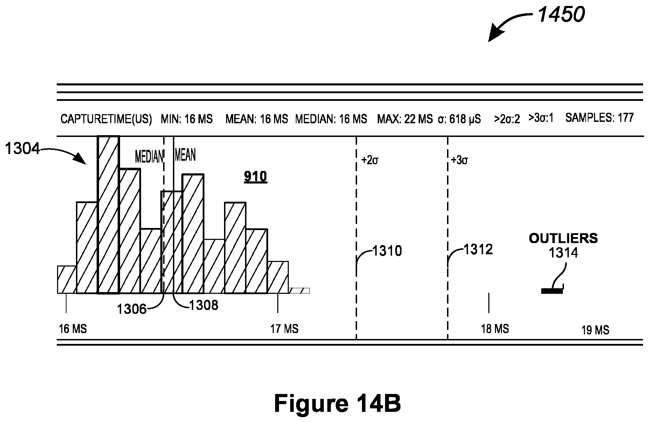

Figure 14A is a portion of an example user interface 1400 that visualizes cycle status signals 906 and I/O signals 904 of three image processing cycles 404, in accordance with some embodiments, and Figure 14B is a portion of another example user interface 1450 that displays a histogram of capture times of a plurality of image processing cycles 404, in accordance with some embodiments. In some embodiments, an area of the user interface 1300 is selected and displayed in a zoomed mode. For example, the user interface 1400 corresponds to a selected area 1316 in which cycle states of the three image processing cycles 404 can be reviewed in detail. In another example, the user interface 1450 corresponds to a selected area 1318. A histogram 1304 of the statistical signals of the image capture times 1302 is visualized on the user interface 1450, representing a distribution of the image capture times 1302 of the 177 image processing cycles 404. A median value 1306, a mean value 1308, a twice standard deviation value 1310, and a triple standard value 1312 are marked on the histogram 1304. One or more outliers 1314 are detected beyond the triple standard value 1312, and correlated with external and internal events. In some embodiments, event data 912 associated with the outlier 1314 is analyzed subsequently to occurrence of an anomaly.

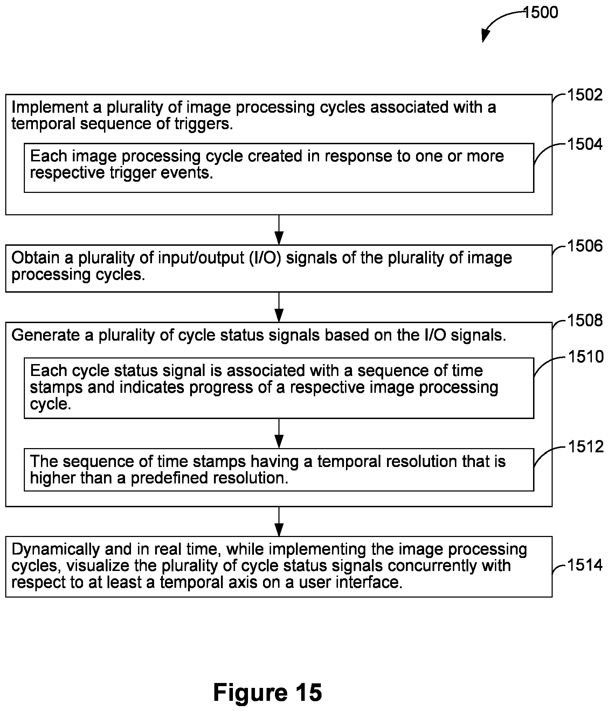

Figure 15 is a flow diagram of a method 1500 for tracking image processing cycles in real time, in accordance with some embodiments. The method 1500 is implemented at an electronic system for tracking image processing cycles 404 in real time. The electronic system has memory and one or more processors, and includes an electronic device 100 and a computer device 302 (Figure 3). In some embodiments, the electronic device 100 includes one or more cameras 112 configured to capture images. In some embodiments, the electronic device 100 is coupled to a camera or a distinct electronic device having a camera, and configured to acquire image data including a sequence of images.

The electronic system implements (1502) a plurality of image processing cycles 404 associated with a temporal sequence of triggers, and each image processing cycle 404 is created (1504) in response to one or more respective trigger events 602 (Figure 6). The electronic system obtains (1506) a plurality of input/output (I/O) signals 904 of the plurality of image processing cycles 404, and generates (1508) a plurality of cycle status signals 906 based on the I/O signals 904. Each cycle status signal 906 is associated (1510) with a sequence of time stamps 914 and indicates progress of a respective image processing cycle 404. The sequence of time stamps 914 has (1512) a temporal resolution that is higher than a predefined resolution. Dynamically and in real time, while implementing the image processing cycles 404, the electronic system visualizes (1514) the plurality of cycle status signals 906 concurrently with respect to at least a temporal axis 1110 on a user interface (e.g., user interfaces shown in Figures 11A-14B).

In some embodiments, the electronic system obtains one or more metric signals 908 indicating overall system performance associated with the plurality of image processing cycles 404 and visualizes the one or more metric signals 908 concurrently with the plurality of cycle status signals 906. Each of the one or more metric signals 908 displayed with respect to the temporal axis 1110. Further, in some embodiments, the electronic system detects an outlier of at least one metric signal based on an outlier criterion. In response to detection of the outlier, the highlights a portion of the at least one metric signal 908 associated with the outlier on the user interface. Additionally, in some embodiments, the at least one metric signal includes two or more metric signals 908. The electronic system monitors a correlation of the two or more metric signals 908, and the outlier criterion is associated with a variation of the correlation. In some embodiments, the at least one metric signal includes one or more of: a CPU usage level, a CPU operation duration, a core temperature, a memory use, and a network bandwidth. In response to detection of the outlier, the electronic system initiates an action on CPU usage by a subset of the plurality of image processing cycles 404.

In some embodiments, each of the one or more metric signals 908 is one of: an image acquisition time, a CPU core loading percentage, CPU temperature, a memory usage, a number of threads, and network traffic. In some embodiments, the one or more metric signals 908 includes one of: a period, frequency, a duty cycle, a pulse width, a high time, and a low time of one of the plurality of I/O signals 904.

In some embodiments, the electronic system visualizes a subset of the plurality of I/O signals 904 concurrently with the plurality of cycle status signals 906, and each of the subset of the plurality of I/O signals 904 is displayed with respect to the temporal axis 1110.

In some embodiments, the electronic system generates one or more statistical signals 910 based on a subset of a plurality of system settings 902, the plurality of cycle status signals 906, the plurality of I/O signals 904, and one or more metric signals 908. The electronic system further visualizes the one or mor statistical signals 910 concurrently with the plurality of cycle status signals 906 and with respect to a non-temporal axis 1110.

In some embodiments, visualizing the plurality of cycle status signals 906 further includes displaying each of the plurality of cycle status signals 906 in a stacked manner. The plurality of cycle status signals 906 is displayed with respect to the same temporal axis 1110 in a synchronous manner.

In some embodiments, the temporal axis 1110 includes a single temporal axis 1110, and visualizing the plurality of cycle status signals 906 further includes, for each cycle status signal 906, identifying an active portion of the respective status signal and an associated active duration of time; and in accordance with the associated active duration of time, displaying the active portion of the respective cycle status signal 906 on a row with respect to the single temporal axis 1110. Further, in some embodiments, in accordance with a determination that the active portion of a first cycle status signal 906-1 of a first image processing cycle and the active portion of a second cycle status signal 906-2 of a second image processing cycle overlap with one another on the single temporal axis 1110, the electronic system determines that at least one of the first image processing cycle and the second image processing cycle encounters an abnormal condition. Additionally, in some embodiments, the electronic system automatically extends an inter-image time gap, in accordance with a determination that the active portion of a first cycle status signal 906-1 of a first image processing cycle and the active portion of a second cycle status signal 906-2 of a second image processing cycle overlap with one another on the single temporal axis 1110.

In some embodiments, in response to detection of overlapping of two cycle status signals 906, the electronic system highlights an overlapping portion of each of the two cycle status signals 906 on the user interface.

In some embodiments, the plurality of I/O signals 904 includes one or more images captured in response to each trigger, a trigger signal of each trigger, and barcode information extracted from the one or more images.

In some embodiments, the plurality of I/O signals 904 is obtained from two or more sources, and associated with timestamps that are correlated according to a precision time protocol.

In some embodiments, the predefined resolution is 20 nanosecond.

In some embodiments, each image processing cycle 404 includes one or more imaging stages of: triggering, acquisition, setting up, decoding, and image processing and corresponds to a respective cycle status signal 906-2 coded by color based on the one or more imaging stages.

In some embodiments, a first image processing cycle includes an image processing stage in which a first image is processed by a plurality of parallel processing threads.

In some embodiments, the electronic system executing a digital oscilloscope application including enabling display of the user interface on a screen of a computer device.

In some embodiments, the electronic system enabling display of the user interface on a screen of a computer device via a browser application.

In some embodiments, each system setting 902 is one of a plurality of camera settings 902A, a plurality of image processing settings 902B, and a plurality of processor settings 902C. The plurality of camera settings 902A includes one or more of: exposure time, focal length, gain, image filtering options, lighting parameters, windows of interest parameters, color conversion parameters, linear and non-linear calibration settings, contrast correction parameters, and histogram normalization parameters. The plurality of image processing settings 902B includes one or more of: a symbology setting, an effort level, a qualifier setting, a regions of interest, and a number of retries. The plurality of processor settings 902C includes one or more of: a thread pool size, a thread priority, a thread affinity (CPU core assignments), a trigger delay, a stack size, a timeout, a throttling parameter, and a heartbeat frequency.

Each of the above identified executable modules, applications, or sets of procedures may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise re-arranged in various embodiments. In some embodiments, the memory 206 stores a subset of the modules and data structures identified above. Furthermore, the memory 206 may store additional modules or data structures not described above.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and "comprising," when used in this specification, specify the presence of stated features, steps, operations, elements, and/or components, but do not preclude the presence or addition of one or more other features, steps, operations, elements, components, and/or groups thereof.

As used herein, the phrase "based on" does not mean "based only on," unless expressly specified otherwise. In other words, the phrase "based on" describes both "based only on" and "based at least on."

As used herein, the term "exemplary" means "serving as an example, instance, or illustration," and does not necessarily indicate any preference or superiority of the example over any other configurations or embodiments.

As used herein, the term "and/or" encompasses any combination of listed elements. For example, "A, B, and/or C" includes the following sets of elements: A only, B only, C only, A and B without C, A and C without B, B and C without A, or a combination of all three elements, A, B, and C.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method for tracking image processing cycles in real time, which implemented at an electronic system having memory and one or more processors, the method comprising:
implementing a plurality of image processing cycles associated with a temporal sequence of triggers, each image processing cycle created in response to one or more respective trigger events;
obtaining a plurality of input/output (I/O) signals of the plurality of image processing cycles;
generating a plurality of cycle status signals based on the I/O signals, wherein each cycle status signal is associated with a sequence of time stamps and indicates progress of a respective image processing cycle, the sequence of time stamps having a temporal resolution that is higher than a predefined resolution; and
dynamically and in real time, while implementing the image processing cycles, visualizing the plurality of cycle status signals concurrently with respect to at least a temporal axis on a user interface.

2. The method of claim 1, further comprising:
obtaining one or more metric signals indicating overall system performance associated with the plurality of image processing cycles; and
visualizing the one or more metric signals concurrently with the plurality of cycle status signals, each of the one or more metric signals displayed with respect to the temporal axis.

3. The method of claim 2, further comprising:
detecting an outlier of at least one metric signal based on an outlier criterion; and
in response to detection of the outlier, highlighting a portion of the at least one metric signal associated with the outlier on the user interface.

4. The method of claim 3, the at least one metric signal including two or more metric signals, the method further comprising:
monitoring a correlation of the two or more metric signals, wherein the outlier criterion is associated with a variation of the correlation.

5. The method of claim 3, wherein the at least one metric signal includes one or more of:
a CPU usage level, a CPU operation duration, a core temperature, an image acquisition time,
a memory usage, a number of threads, network traffic, and a network bandwidth, further comprising:
in response to detection of the outlier, initiating an action on CPU usage by a subset of the plurality of image processing cycles.

6. The method of claim 1, further comprising:
visualizing a subset of the plurality of I/O signals concurrently with the plurality of cycle status signals, each of the subset of the plurality of I/O signals displayed with respect to the temporal axis.

7. The method of claim 1, further comprising:
generating one or more statistical signals based on a subset of a plurality of system settings, the plurality of cycle status signals, the plurality of I/O signals, and one or more metric signals; and
visualizing the one or mor statistical signals concurrently with the plurality of cycle status signals and with respect to a non-temporal axis.

8. The method of claim 1, wherein visualizing the plurality of cycle status signals further comprises:
displaying each of the plurality of cycle status signals in a stacked manner, wherein the plurality of cycle status signals is displayed with respect to the same temporal axis in a synchronous manner.

9. The method of claim 1, wherein the temporal axis includes a single temporal axis, and visualizing the plurality of cycle status signals further comprises, for each cycle status signal:
identifying an active portion of the respective status signal and an associated active duration of time; and
in accordance with the associated active duration of time, displaying the active portion of the respective cycle status signal on a row with respect to the single temporal axis.

10. The method of claim 9, further comprising:
in accordance with a determination that the active portion of a first cycle status signal of a first image processing cycle and the active portion of a second cycle status signal of a second image processing cycle overlap with one another on the single temporal axis, determining that at least one of the first image processing cycle and the second image processing cycle encounters an abnormal condition.

11. The method of claim 9, further comprising:
in accordance with a determination that the active portion of a first cycle status signal of a first image processing cycle and the active portion of a second cycle status signal of a second image processing cycle overlap with one another on the single temporal axis, automatically extending an inter-image time gap.

12. An electronic system, comprising:
one or more processors; and
memory storing one or more programs configured to be executed by the processors, the one or more programs further comprising instructions for:
implementing a plurality of image processing cycles associated with a temporal sequence of triggers, each image processing cycle created in response to one or more respective trigger events;
obtaining a plurality of input/output (I/O) signals of the plurality of image processing cycles;
generating a plurality of cycle status signals based on the I/O signals, wherein each cycle status signal is associated with a sequence of time stamps and indicates progress of a respective image processing cycle, the sequence of time stamps having a temporal resolution that is higher than a predefined resolution; and
dynamically and in real time, while implementing the image processing cycles, visualizing the plurality of cycle status signals concurrently with respect to at least a temporal axis on a user interface.

13. The electronic system of claim 12, the one or more programs further comprising instructions for:
in response to detection of overlapping of two cycle status signals, highlighting an overlapping portion of each of the two cycle status signals on the user interface.

14. The electronic system of claim 12, wherein the plurality of I/O signals includes one or more images captured in response to each trigger, a trigger signal of each trigger, and barcode information extracted from the one or more images.

15. The electronic system of claim 12, wherein the plurality of I/O signals is obtained from two or more sources, and associated with timestamps that are correlated according to a precision time protocol.

16. A non-transitory computer-readable storage medium storing one or more programs for execution by one or more processors of an electronic system, the one or more programs comprising instructions for:
implementing a plurality of image processing cycles associated with a temporal sequence of triggers, each image processing cycle created in response to one or more respective trigger events;
obtaining a plurality of input/output (I/O) signals of the plurality of image processing cycles;
generating a plurality of cycle status signals based on the I/O signals, wherein each cycle status signal is associated with a sequence of time stamps and indicates progress of a respective image processing cycle, the sequence of time stamps having a temporal resolution that is higher than a predefined resolution; and
dynamically and in real time, while implementing the image processing cycles, visualizing the plurality of cycle status signals concurrently with respect to at least a temporal axis on a user interface.

17. The non-transitory computer-readable storage medium of claim 16, wherein each image processing cycle includes one or more imaging stages of: triggering, acquisition, setting up, decoding, and image processing and corresponds to a respective cycle status signal coded by color based on the one or more imaging stages.

18. The non-transitory computer-readable storage medium of claim 16, wherein a first image processing cycle includes an image processing stage in which a first image is processed by a plurality of parallel processing threads.

19. The non-transitory computer-readable storage medium of claim 16, the one or more programs further comprising instructions for one of:
executing a digital oscilloscope application including enabling display of the user interface on a screen of a computer device; and
enabling display of the user interface on the screen of the computer device via a browser application.

20. The non-transitory computer-readable storage medium of claim 16, wherein:
each system setting is one of a plurality of camera settings, a plurality of image processing settings, and a plurality of processor settings;
the plurality of camera settings includes one or more of: an exposure time, a focal length, gain, an image filtering options, lighting parameters, windows of interest parameters, color conversion parameters, linear and non-linear calibration settings, contrast correction parameters, and histogram normalization parameters;
the plurality of image processing settings includes one or more of: a symbology setting, an effort level, a qualifier setting, a regions of interest, and a number of retries; and
the plurality of processor settings includes one or more of: a thread pool size, a thread priority, a thread affinity (CPU core assignments), a trigger delay, a stack size, a timeout, a throttling parameter, and a heartbeat frequency.
